# EUROPEAN PATENT APPLICATION

(11) **EP 4 593 339 A1**
(43) Date of publication of application: **30.07.2025**
(21) Application number: 22966149.1
(22) Date of filing: 24.11.2022
(51) Int. Cl.: H04L 27/00

(54) **SYSTEM INFORMATION SENDING METHOD, SYSTEM INFORMATION RECEIVING METHOD, AND RELATED APPARATUS**

(71) Applicant: Huawei Technologies Co., Ltd., Shenzhen, Guangdong 518129 (CN)
(72) Inventor: LUO, Hejia, Shenzhen, Guangdong 518129 (CN); MENG, Xian, Shenzhen, Guangdong 518129 (CN); ZHANG, Xi, Shenzhen, Guangdong 518129 (CN); WANG, Jun, Shenzhen, Guangdong 518129 (CN)
(74) Representative: Maiwald GmbH
(86) International application number: PCT/CN2022/133862
(87) International publication number: WO 2024/108454

(57) **Abstract**

This application provides a system information sending method, a system information receiving method, and a related apparatus, to reduce an information amount of configuration information delivered by a first network device. The method provided in this application includes: A first network device obtains a first value tag in first system information, where the first value tag is a value tag associated with configuration information of a first transmission point set in the first system information. The first network device generates second system information, where the second system information includes configuration information of a second transmission point set and a second value tag associated with the configuration information of the second transmission point set, the second transmission point set is a proper subset of the first transmission point set, and a value of the second value tag is the same as a value of the first value tag. The first network device sends the second system information.

## Description

### TECHNICAL FIELD

This application relates to the field of communication technologies, and in particular, to a system information sending method, a system information receiving method, and a related apparatus.

### BACKGROUND

With development of information technologies, high efficiency and diversity of communication are more urgent. Currently, satellites play an irreplaceable role in some important fields such as space communication and aviation communication. Satellite communication features a long communication distance, a large coverage area, flexible networking, and the like. The satellites can provide services for both fixed terminals and various types of mobile terminals.

With relative motion caused by satellite motion and earth rotation, a terminal device may switch between different satellites, so that a satellite provides a corresponding service for the terminal device within a period of time. Therefore, a satellite to which the terminal device switches at a different time is predictable. A network device may deliver, to the terminal device in advance, configuration information of the satellite that provides a service for the terminal device in a future period of time.

However, how the network device sends the configuration information of the satellite to the terminal device to reduce a broadcast amount of the configuration information of the satellite is a problem worth considering.

### SUMMARY

This application provides a system information sending method, a system information receiving method, and a related apparatus, to reduce an information amount of configuration information delivered by a first network device.

A first aspect of this application provides a communication method. The method includes:

A first network device obtains a first value tag in first system information. The first value tag is a value tag associated with configuration information of a first transmission point set in the first system information. The first network device generates second system information. The second system information includes configuration information of a second transmission point set and a second value tag associated with the configuration information of the second transmission point set, the second transmission point set is a proper subset of the first transmission point set, and a value of the second value tag is the same as a value of the first value tag. The first network device sends the second system information.

In the foregoing technical solution, the second transmission point set is the proper subset of the first transmission point set, and the first network device may send only the configuration information of the second transmission point set, and does not need to deliver all the configuration information of the first transmission point set again, so that an information amount of configuration information delivered by the first network device is reduced, and signaling overheads are reduced. Further, the second transmission point set is the proper subset of the first transmission point set, and the value of the second value tag is the same as the value of the first value tag. A terminal device determines, based on the value of the first value tag, that the configuration information of the second transmission point set in the second system information does not need to be read. In this way, a process of reading unnecessary configuration information by the terminal device is reduced, and power consumption of the terminal device is reduced.

According to the first aspect, in a possible implementation, configuration information of each transmission point in the second transmission point set in the second system information is a subset of configuration information of the transmission point in the first system information. In this implementation, further, if the configuration information of each transmission point in the second transmission point set in the second system information is the subset of the configuration information of the transmission point in the first system information, the terminal device may not read the configuration information in the second system information. In this way, a process of reading unnecessary configuration information by the terminal device is reduced.

According to the first aspect, in a possible implementation, the method further includes: The first network device obtains the configuration information of the first transmission point set. In this way, the first network device properly determines the value of the second value tag.

According to the first aspect, in a possible implementation, the first system information is sent by the first network device, or the first system information is sent by a second network device. In this implementation, the first system information and the second system information may be sent by a same network device, or may be sent by different network devices. In this way, the technical solutions of this application are applicable to two different scenarios.

According to the first aspect, in a possible implementation, the first system information is sent by the first network device at a first moment, the second system information is sent by the first network device at a second moment, and the first moment is a moment before the second moment, or the first moment is a moment that is before the second moment and that is not adjacent to the second moment. Alternatively, the second network device is a network device that is before the first network device and that is adjacent to the first network device, or the second network device is a network device that is before the first network device and that is not adjacent to the first network device.

In this implementation, when the first system information and the second system information are sent by the same network device, a possible relationship of time at which the network device sends the first system information and the second system information is shown. When the first system information and the second system information are sent by different network devices, a possible location relationship between the different network devices is shown. In this way, implementation of the solution is enriched.

According to the first aspect, in a possible implementation, the second transmission point set is a proper subset of a third transmission point set, and third system information includes configuration information of the third transmission point set. In this implementation, the second transmission point set may further be the proper subset of the third transmission point set. The technical solutions of this application may be compared with a transmission point set indicated in a plurality of pieces of system information, so that the first network device determines a proper value for the second value tag, or the first network device associates a proper value tag with the configuration information of the second transmission point set.

According to the first aspect, in a possible implementation, the configuration information of the second transmission point set is further associated with a third value tag, a value of the third value tag is the same as a value of a fourth value tag in the third system information, and the fourth value tag is a value tag associated with the configuration information of the third transmission point set. Configuration information of each transmission point in the second transmission point set in the second system information is a subset of configuration information of the transmission point in the third system information.

In this implementation, if the second transmission point set is the proper subset of the first transmission point set, the second transmission point set is the proper subset of the third transmission point set, the configuration information of each transmission point in the second transmission point set in the second system information is the subset of the configuration information of the transmission point in the third system information, and the configuration information of each transmission point in the second transmission point set in the second system information is the subset of the configuration information of the transmission point in the third system information, the second transmission point set is associated with two value tags. A value of one of the value tags is the same as a value of a value tag associated with the configuration information of the first transmission point set, and a value of the other value tag is the same as a value of a value tag associated with the configuration information of the third transmission point set. In this way, the terminal device may determine, based on a value of one of the value tags, not to read the configuration information in the second system information. Further, this helps the terminal device obtain a change relationship between the configuration information of the second transmission point set and configuration information of a transmission point set previously received by the terminal device.

According to the first aspect, in a possible implementation, the third system information is sent by the first network device at a third moment. If the first moment is the moment before the second moment, the third moment is a moment before the first moment. Alternatively, if the first moment is the moment that is before the second moment and that is not adjacent to the second moment, the third moment is a moment that is before the second moment and that is adjacent to the second moment. In this implementation, for an implementation in which the first system information, the second system information, and the third system information are sent by a same network device, a relationship of time at which the first network device sends the three pieces of system information is provided.

According to the first aspect, in a possible implementation, the third system information is sent by a third network device. If the second network device is a network device that is after the first network device and that is adjacent to the first network device, the third network device is a network device before the first network device. Alternatively, if the second network device is a network device that is after the first network device and that is not adjacent to the first network device, the third network device is a network device that is before the second network device and that is adjacent to the second network device. In this implementation, for an implementation in which the first system information, the second system information, and the third system information are sent by different network devices, a location relationship between the different network devices is provided.

According to the first aspect, in a possible implementation, a same type of configuration information of different transmission points in the second transmission point set is associated with a same area identifier (areaSope). In this way, the terminal device reuses a same type of configuration information of different function transmission points.

A second aspect of this application provides a system information receiving method. The method includes:
A terminal device receives second system information from a first network device. The second system information includes configuration information of a second transmission point set and a second value tag associated with the configuration information of the second transmission point set. If a value of the second value tag is the same as a value of a first value tag, the terminal device skips reading the configuration information of the second transmission point set in the second system information. The first value tag is a value tag associated with configuration information of a first transmission point set in first system information, and the second transmission point set is a proper subset of the first transmission point set.

In the foregoing technical solution, the second transmission point set is the proper subset of the first transmission point set, and the first network device may send only the configuration information of the second transmission point set, and does not need to deliver all the configuration information of the first transmission point set again, so that an information amount of configuration information delivered by the first network device is reduced. Further, the second transmission point set is the proper subset of the first transmission point set, and the value of the second value tag is the same as the value of the first value tag. The terminal device may determine, based on the value of the first value tag, that the configuration information of the second transmission point set in the second system information does not need to be read. In this way, a process of reading unnecessary configuration information by the terminal device is reduced, and power consumption of the terminal device is reduced.

According to the second aspect, in a possible implementation, configuration information of each transmission point in the second transmission point set in the second system information is a subset of configuration information of the transmission point in the first system information. In this implementation, further, if the configuration information of each transmission point in the second transmission point set in the second system information is the subset of the configuration information of the transmission point in the first system information, the terminal device may not read the configuration information in the second system information. In this way, a process of reading unnecessary configuration information by the terminal device is reduced.

According to the second aspect, in a possible implementation, before that a terminal device receives second system information from a first network device, the method further includes: The terminal device obtains the first system information. In this implementation, the terminal device obtains the first system information, so that the terminal device determines, with reference to the first value tag in the first system information, whether to read the configuration information in the second system information.

According to the second aspect, in a possible implementation, the first system information is sent by the first network device, or the first system information is sent by a second network device. In this implementation, the first system information and the second system information may be sent by a same network device, or may be sent by different network devices. In this way, the technical solutions of this application are applicable to two different scenarios.

According to the second aspect, in a possible implementation, the first system information is sent by the first network device at a first moment, the second system information is sent by the first network device at a second moment, and the first moment is a moment before the second moment, or the first moment is a moment that is before the second moment and that is not adjacent to the second moment.

The second network device is a network device that is after the first network device and that is adjacent to the first network device, or the second network device is a network device that is after the first network device and that is not adjacent to the first network device.

In this implementation, when the first system information and the second system information are sent by the same network device, a possible relationship of time at which the network device sends the first system information and the second system information is shown. When the first system information and the second system information are sent by different network devices, a possible location relationship between the different network devices is shown. In this way, implementation of the solution is enriched.

According to the second aspect, in a possible implementation, that if a value of the second value tag is the same as a value of a first value tag, the terminal device skips reading the configuration information of the second transmission point set in the second system information includes:
If the value of the second value tag is the same as a value of one of the first value tag and a fourth value tag, the terminal device skips reading the configuration information of the second transmission point set in the second system information, where the fourth value tag is a value tag associated with configuration information of a third transmission point set in third system information.

In this implementation, if the value of the second value tag is the same as a value of a value tag previously obtained by the terminal device in the system information, the terminal device may not read the configuration information in the second system information. In this way, a process of reading unnecessary configuration information by the terminal device is reduced.

According to the second aspect, in a possible implementation, the second transmission point set is a proper subset of the third transmission point set. In this implementation, the second transmission point set may further be the proper subset of the third transmission point set. The technical solutions of this application may be compared with a transmission point set indicated in a plurality of pieces of system information, so that the first network device determines a proper value for the second value tag, or the first network device associates a proper value tag with the configuration information of the second transmission point set.

According to the second aspect, in a possible implementation, the configuration information of each transmission point in the second transmission point set in the second system information is a subset of configuration information of the transmission point in the third system information.

In this implementation, if the second transmission point set is the proper subset of the first transmission point set, the second transmission point set is the proper subset of the third transmission point set, the configuration information of each transmission point in the second transmission point set in the second system information is the subset of the configuration information of the transmission point in the third system information, and the configuration information of each transmission point in the second transmission point set in the second system information is the subset of the configuration information of the transmission point in the third system information, the value of the second value tag associated with the second transmission point set may be the same as the value of the value tag associated with the configuration information of the first transmission point set, or may be the same as a value of a value tag associated with the configuration information of the third transmission point set. In this way, the terminal device may determine, based on the value of the second value tag, not to read the configuration information in the second system information. Further, this helps the terminal device obtain a change relationship between the configuration information of the second transmission point set and configuration information of a transmission point set previously received by the terminal device.

According to the second aspect, in a possible implementation, the configuration information of the second transmission point set is further associated with a third value tag. If the value of the second value tag is the same as the value of the first value tag, a value of the third value tag is the same as a value of the fourth value tag. Alternatively, if the value of the second value tag is the same as a value of the fourth value tag, a value of the third value tag is the same as the value of the first value tag. In this implementation, the configuration information of the second transmission point set may be associated with two value tags. A value of one value tag is the same as the value of the value tag associated with the configuration information of the first transmission point set, and a value of the other value tag is the same as the value of the value tag associated with the configuration information of the third transmission point set. In this way, the terminal device may determine, based on a value of one of the value tags, not to read the configuration information in the second system information. Further, this helps the terminal device obtain a change relationship between the configuration information of the second transmission point set and configuration information of a transmission point set previously received by the terminal device.

According to the second aspect, in a possible implementation, the third system information is sent by the first network device at a third moment. If the first moment is the moment before the second moment, the third moment is a moment before the first moment. Alternatively, if the first moment is the moment that is before the second moment and that is not adjacent to the second moment, the third moment is a moment that is before the second moment and that is adjacent to the second moment. In this implementation, for an implementation in which the first system information, the second system information, and the third system information are sent by a same network device, a relationship of time at which the first network device sends the three pieces of system information is provided.

According to the second aspect, in a possible implementation, the third system information is sent by a third network device. If the second network device is the network device that is after the first network device and that is adjacent to the first network device, the third network device is a network device before the first network device. Alternatively, if the second network device is the network device that is after the first network device and that is not adjacent to the first network device, the third network device is a network device that is before the second network device and that is adjacent to the second network device. In this implementation, for an implementation in which the first system information, the second system information, and the third system information are sent by different network devices, a location relationship between the different network devices is provided.

According to the second aspect, in a possible implementation, a same type of configuration information of different transmission points in the second transmission point set is associated with a same areaSope identifier.

A third aspect of this application provides a communication apparatus. The communication apparatus includes:
a processing module, configured to: obtain a first value tag in first system information, where the first value tag is a value tag associated with configuration information of a first transmission point set in the first system information; and generate second system information, where the second system information includes configuration information of a second transmission point set and a second value tag associated with the configuration information of the second transmission point set, the second transmission point set is a proper subset of the first transmission point set, and a value of the second value tag is the same as a value of the first value tag; and
a transceiver module, configured to send the second system information.

According to the third aspect, in a possible implementation, configuration information of each transmission point in the second transmission point set in the second system information is a subset of configuration information of the transmission point in the first system information.

According to the third aspect, in a possible implementation, the processing module is further configured to obtain the configuration information of the first transmission point set.

According to the third aspect, in a possible implementation, the first system information is sent by the communication apparatus, or the first system information is sent by a second network device.

According to the third aspect, in a possible implementation, the first system information is sent by the communication apparatus at a first moment, the second system information is sent by the communication apparatus at a second moment, and the first moment is a moment before the second moment, or the first moment is a moment that is before the second moment and that is not adjacent to the second moment. Alternatively, the second network device is a network device that is before the communication apparatus and that is adjacent to the communication apparatus, or the second network device is a network device that is before the communication apparatus and that is not adjacent to the communication apparatus.

According to the third aspect, in a possible implementation, the second transmission point set is a proper subset of a third transmission point set, and third system information includes configuration information of the third transmission point set.

According to the third aspect, in a possible implementation, the configuration information of the second transmission point set is further associated with a third value tag, a value of the third value tag is the same as a value of a fourth value tag in the third system information, and the fourth value tag is a value tag associated with the configuration information of the third transmission point set. Configuration information of each transmission point in the second transmission point set in the second system information is a subset of configuration information of the transmission point in the third system information.

According to the third aspect, in a possible implementation, the third system information is sent by the communication apparatus at a third moment. If the first moment is the moment before the second moment, the third moment is a moment before the first moment. Alternatively, if the first moment is the moment that is before the second moment and that is not adjacent to the second moment, the third moment is a moment that is before the second moment and that is adjacent to the second moment.

According to the third aspect, in a possible implementation, the third system information is sent by a third network device. If the second network device is a network device that is after the communication apparatus and that is adjacent to the communication apparatus, the third network device is a network device before the communication apparatus. Alternatively, if the second network device is a network device that is after the communication apparatus and that is not adjacent to the communication apparatus, the third network device is a network device that is before the second network device and that is adjacent to the second network device.

According to the third aspect, in a possible implementation, a same type of configuration information of different transmission points in the second transmission point set is associated with a same areaSope identifier.

A fourth aspect of this application provides a communication apparatus. The communication apparatus includes:
a transceiver module, configured to receive second system information from a first network device, where the second system information includes configuration information of a second transmission point set and a second value tag associated with the configuration information of the second transmission point set; and
a processing module, configured to: if a value of the second value tag is the same as a value of a first value tag, skip reading the configuration information of the second transmission point set in the second system information, where the first value tag is a value tag associated with configuration information of a first transmission point set in first system information, and the second transmission point set is a proper subset of the first transmission point set.

According to the fourth aspect, in a possible implementation, configuration information of each transmission point in the second transmission point set in the second system information is a subset of configuration information of the transmission point in the first system information.

According to the fourth aspect, in a possible implementation, the processing module is further configured to obtain the first system information.

According to the fourth aspect, in a possible implementation, the first system information is sent by the first network device, or the first system information is sent by a second network device.

According to the fourth aspect, in a possible implementation, the first system information is sent by the first network device at a first moment, the second system information is sent by the first network device at a second moment, and the first moment is a moment before the second moment, or the first moment is a moment that is before the second moment and that is not adjacent to second moment.

The second network device is a network device that is after the first network device and that is adjacent to the first network device, or the second network device is a network device that is after the first network device and that is not adjacent to the first network device.

According to the fourth aspect, in a possible implementation, the processing module is specifically configured to:
if the value of the second value tag is the same as a value of one of the first value tag and a fourth value tag, skip reading the configuration information of the second transmission point set in the second system information, where the fourth value tag is a value tag associated with configuration information of a third transmission point set in third system information.

According to the fourth aspect, in a possible implementation, the second transmission point set is a proper subset of the third transmission point set. In this implementation, the second transmission point set may further be the proper subset of the third transmission point set.

According to the fourth aspect, in a possible implementation, the configuration information of each transmission point in the second transmission point set in the second system information is a subset of configuration information of the transmission point in the third system information.

According to the fourth aspect, in a possible implementation, the configuration information of the second transmission point set is further associated with a third value tag. If the value of the second value tag is the same as the value of the first value tag, a value of the third value tag is the same as a value of the fourth value tag. Alternatively, if the value of the second value tag is the same as a value of the fourth value tag, a value of the third value tag is the same as the value of the first value tag.

According to the fourth aspect, in a possible implementation, the third system information is sent by the first network device at a third moment. If the first moment is the moment before the second moment, the third moment is a moment before the first moment. Alternatively, if the first moment is the moment that is before the second moment and that is not adjacent to the second moment, the third moment is a moment that is before the second moment and that is adjacent to the second moment.

According to the fourth aspect, in a possible implementation, the third system information is sent by a third network device. If the second network device is the network device that is after the first network device and that is adjacent to the first network device, the third network device is a network device before the first network device. Alternatively, if the second network device is the network device that is after the first network device and that is not adjacent to the first network device, the third network device is a network device that is before the second network device and that is adjacent to the second network device.

According to the fourth aspect, in a possible implementation, a same type of configuration information of different transmission points in the second transmission point set is associated with a same areaSope identifier.

A fifth aspect of embodiments of this application provides a communication apparatus. The communication apparatus includes a processor and a memory. The memory stores a computer program. The processor is configured to invoke and run the computer program stored in the memory, to enable the processor to implement any implementation of the first aspect.

Optionally, the communication apparatus further includes a transceiver. The processor is further configured to control the transceiver to send and receive a signal.

A sixth aspect of embodiments of this application provides a communication apparatus. The communication apparatus includes a processor and a memory. The memory stores a computer program. The processor is configured to invoke and run the computer program stored in the memory, to enable the processor to implement any implementation of the second aspect.

Optionally, the communication apparatus further includes a transceiver. The processor is further configured to control the transceiver to send and receive a signal.

A seventh aspect of embodiments of this application provides a communication apparatus. The communication apparatus includes a logic circuit and an input/output interface. The logic circuit is configured to perform a processing operation in any implementation of the first aspect, and the input/output interface is configured to perform receiving and sending operations in any implementation of the first aspect.

An eighth aspect of embodiments of this application provides a communication apparatus. The communication apparatus includes a logic circuit and an input/output interface. The logic circuit is configured to perform a processing operation in any implementation of the second aspect, and the input/output interface is configured to perform receiving and sending operations in any implementation of the second aspect.

A ninth aspect of embodiments of this application provides a computer program product including instructions. When the computer program product runs on a computer, the computer is enabled to perform any implementation of the first aspect and the second aspect.

A tenth aspect of embodiments of this application provides a computer-readable storage medium, including computer instructions. When the computer instructions are run on a computer, the computer is enabled to perform any implementation of the first aspect and the second aspect.

An eleventh aspect of embodiments of this application provides a chip apparatus, including a processor, configured to connect to a memory, and invoke a program stored in the memory, to enable the processor to perform any implementation of the first aspect and the second aspect.

A twelfth aspect of embodiments of this application provides a communication system. The communication system includes the communication apparatus in the third aspect and the communication apparatus in the fourth aspect.

According to the foregoing technical solutions, it can be learned that embodiments of this application have the following advantages.

According to the foregoing technical solutions, the first network device obtains the first value tag in the first system information. The first value tag is the value tag associated with the configuration information of the first transmission point set in the first system information. The first network device generates the second system information. The second system information includes the configuration information of the second transmission point set and the second value tag associated with the configuration information of the second transmission point set, the second transmission point set is the proper subset of the first transmission point set, and the value of the second value tag is the same as the value of the first value tag. The first network device sends the second system information. Therefore, it can be learned that the second transmission point set is the proper subset of the first transmission point set, and the first network device may send only the configuration information of the second transmission point set, and does not need to deliver all the configuration information of the first transmission point set again, so that an information amount of configuration information delivered by the first network device is reduced. Further, the second transmission point set is the proper subset of the first transmission point set, and the value of the second value tag is the same as the value of the first value tag. The terminal device determines, based on the value of the first value tag, that the configuration information of the second transmission point set in the second system information does not need to be read. In this way, a process of reading unnecessary configuration information by the terminal device is reduced, and power consumption of the terminal device is reduced.

### BRIEF DESCRIPTION OF DRAWINGS

FIG. 1 is a diagram of an architecture of non-terrestrial network (non-terrestrial network, NTN) communication in a transparent mode according to an embodiment of this application;
FIG. 2 is a diagram of an architecture of NTN communication in a regenerative mode according to an embodiment of this application;
FIG. 3 is a diagram of an architecture of a communication system to which a communication method is applicable according to an embodiment of this application;
FIG. 4 is a diagram of sending system information according to an embodiment of this application;
FIG. 5 is a diagram of an embodiment of a system information sending method and a system information receiving method according to an embodiment of this application;
FIG. 6a is a diagram of a first scenario of a system information sending method and a system information receiving method according to an embodiment of this application;
FIG. 6b is a diagram of a second scenario of a system information sending method and a system information receiving method according to an embodiment of this application;
FIG. 6c is a diagram of a third scenario of a system information sending method and a system information receiving method according to an embodiment of this application;
FIG. 6d is a diagram of a fourth scenario of a system information sending method and a system information receiving method according to an embodiment of this application;
FIG. 7a is a diagram of a fifth scenario of a system information sending method and a system information receiving method according to an embodiment of this application;
FIG. 7b is a diagram of a sixth scenario of a system information sending method and a system information receiving method according to an embodiment of this application;
FIG. 7c is a diagram of a seventh scenario of a system information sending method and a system information receiving method according to an embodiment of this application;
FIG. 7d is a diagram of an eighth scenario of a system information sending method and a system information receiving method according to an embodiment of this application;
FIG. 8 is a first diagram of system information according to an embodiment of this application;
FIG. 9 is a second diagram of system information according to an embodiment of this application;
FIG. 10 is a third diagram of system information according to an embodiment of this application;
FIG. 11 is a fourth diagram of system information according to an embodiment of this application;
FIG. 12 is a fifth diagram of system information according to an embodiment of this application;
FIG. 13 is a diagram of a first structure of a communication apparatus according to an embodiment of this application;
FIG. 14 is a diagram of a second structure of a communication apparatus according to an embodiment of this application;
FIG. 15 is a diagram of a structure of a terminal device according to an embodiment of this application;
FIG. 16 is a diagram of a third structure of a communication apparatus according to an embodiment of this application;
FIG. 17 is a diagram of a fourth structure of a communication apparatus according to an embodiment of this application; and
FIG. 18 is a diagram of a fifth structure of a communication apparatus according to an embodiment of this application.

### DESCRIPTION OF EMBODIMENTS

Embodiments of this application provide a system information sending method, a system information receiving method, and a related apparatus, to reduce an information amount of configuration information delivered by a first network device.

The following clearly and completely describes technical solutions in embodiments of this application with reference to accompanying drawings in embodiments of this application. It is clear that the described embodiments are merely some but not all of embodiments of this application. All other embodiments obtained by a person skilled in the art according to embodiments of this application without creative efforts shall fall within the protection scope of this application.

Reference to "an embodiment", "some embodiments", or the like described in this application means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" represents "or". For example, A/B may represent A or B. The term "and/or" in this specification describes only an association relationship between associated objects and represents that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof means any combination of these items, including a single item (piece) or any combination of a plurality of items (pieces). For example, at least one of a, b, or c may represent a, b, c, a and b, a and c, b and c, or a, b, and c. a, b, and c may be singular or plural.

For ease of understanding, the following first describes technical terms in embodiments of this application.

### 1. NTN communication:

Currently, a new radio (new radio, NR) system has entered a commercial deployment phase from a standardization phase. The NR system is researched and designed based on characteristics of terrestrial communication, and has a characteristic of providing high-rate, highreliability, and low-delay communication for a user terminal. Compared with the terrestrial communication, the NTN communication features a large coverage area, flexible networking, and the like. Currently, research institutes, communication organizations, companies, and the like all participate in research on NTN communication technologies and standards, and intend to build a unified communication network for space-air-ground communication.

In the NTN communication, networking may be performed by using devices such as an uncrewed aerial vehicle and a high altitude platform, to provide services such as data transmission and voice communication for user equipment (user equipment, UE). A satellite in the high altitude platform (high altitude platform station, HAPS) is used as an example. The satellite is generally eight kilometers (km) to 50 km high above the ground. Satellites may be classified into the following three types based on orbital heights of the satellites: geostationary earth orbit (geostationary earth orbit, GEO) satellites, also referred to as geosynchronous orbit satellites, medium earth orbit (medium earth orbit, MEO) satellites, and low earth orbit (low earth orbit, LEO) satellites.

The GEO satellite has an orbital height of 35,786 km. A main advantage is that the GEO satellite can remain stationary relative to the ground and provides a large coverage area. However, the GEO satellite has corresponding disadvantages: (1) An orbit of the GEO satellite is far away from the earth, and a propagation loss in free space is large. As a result, a communication link budget is tight. To increase a transmit/receive gain, the satellite needs to be equipped with an antenna with a large diameter. (2) A communication transmission delay is high, and round-trip time may reach about 500 milliseconds (ms), which cannot meet a requirement of a real-time service. (3) Orbital resources are relatively limited, launch costs are high, and coverage cannot be provided for polar areas of the earth. The MEO satellite has an orbital height ranging from 2,000 km to 35,786 km. An advantage is that the MEO satellite can implement global coverage by using a relatively small quantity of satellites. However, the orbital height of the MEO satellite is higher than that of the LEO satellite, and a transmission delay is still higher than that of the LEO satellite communication. Therefore, the MEO satellite is mainly used for positioning and navigation. The LEO satellite has an orbital height ranging from 300 km to 2,000 km. Compared with the MEO satellite and GEO satellite, the LEO satellite has a lower orbital height and has the following advantages: a low data transmission delay, a small transmission loss, and low transmission costs. Therefore, the LEO satellite communication has also gained wide attention in recent years.

The NTN communication may be classified into the following according to working modes of the satellites, for example, a transparent (transparent) mode and a regenerative (regenerative) mode.

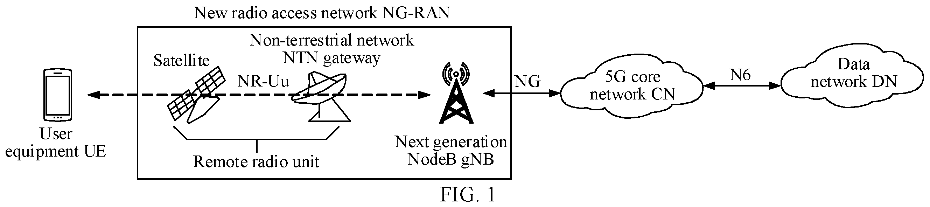

FIG. 1 is a diagram of an architecture of NTN communication in a transparent mode. As shown in FIG. 1, a satellite has a relay forwarding function. An NTN gateway has functions of a base station or some functions of the base station. The NTN gateway may be understood as a base station, for example, a next generation NodeB (next generation NodeB, gNB), and a communication delay of an NTN is a transmission delay from the satellite to the NTN gateway. Alternatively, the NTN gateway and the base station may be separately deployed. The communication delay of the NTN includes two parts: a transmission delay from the satellite to the NTN gateway and a transmission delay from the NTN gateway to the base station. UE may access the base station via the satellite, to communicate with a data network (data network, DN) via a core network (core network, CN) like a 5th generation (5th generation, 5G) CN.

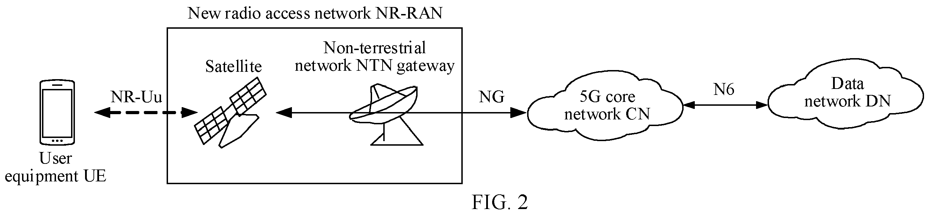

FIG. 2 is a diagram of an architecture of NTN communication in a regenerative mode. As shown in FIG. 2, a satellite has a data processing capability, and has functions of a base station or some functions of the base station. In other words, the satellite may be understood as a base station. In this case, UE may access the satellite, to communicate with a DN via a CN.

It can be learned that, regardless of the transparent mode or the regenerative mode, the NTN communication may implement interconnection between the satellite and the CN through a defined interface between the base station and the CN, and may also implement assistance and interconnection with higher timeliness between satellites through an interface defined between base stations. In a new radio (new radio, NR) system, namely, a 5G system, an interface between base stations is referred to as an Xn interface, and an interface between a base station and a core network is referred to as an NG interface.

It may be further understood that the foregoing descriptions are provided by using the satellite as an example, and the satellite may also be replaced with another HAPS device or an uncrewed aerial vehicle. The satellites may be further classified into medium-orbit satellites, highorbit satellites, tilted geosynchronous orbit satellites, geosynchronous orbit satellites, and the like.

For the foregoing technical problems, embodiments of this application provide the following technical solutions, to reduce an information amount of configuration information delivered by a first network device.

The following describes the technical solutions of this application with reference to the accompanying drawings.

The technical solutions in embodiments of this application may be applied to various communication systems such as a wireless fidelity (wireless fidelity, Wi-Fi) system, a vehicle to everything (vehicle to everything, V2X) communication system, a device to device (device to device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5G mobile communication system, for example, an NR system, and a future communication system.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

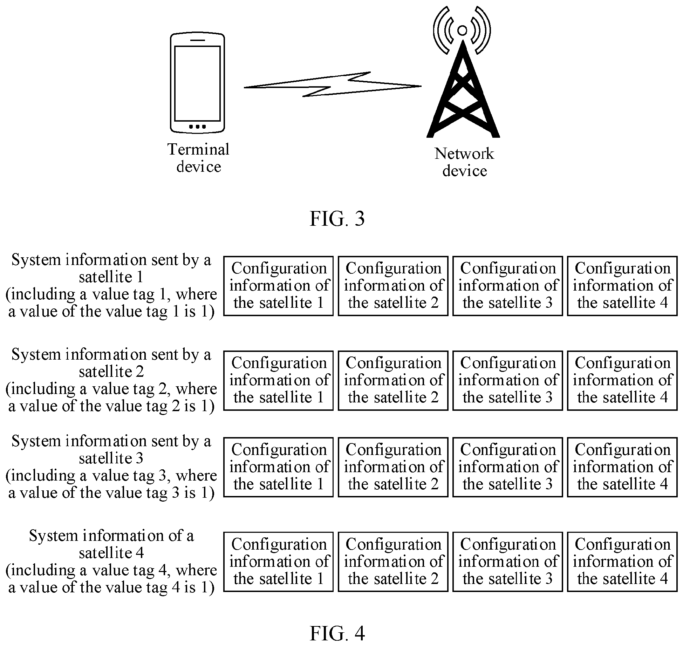

For ease of understanding embodiments of this application, a communication system shown in FIG. 3 is first used as an example to describe in detail a communication system applicable to embodiments of this application. For example, FIG. 3 is a diagram of an architecture of a communication system to which a communication method is applicable according to an embodiment of this application.

As shown in FIG. 3, the communication system mainly includes a terminal device and a network device.

The terminal device may be a terminal with a transceiver function, or may be a chip or a chip system that may be disposed in the terminal device. The terminal device may also be referred to as user equipment (user equipment, UE), an access terminal, a subscriber unit (subscriber unit), a subscriber station, a mobile station (mobile station, MS), a remote station, a remote terminal, a mobile device, a user terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant computer (personal digital assistant, PDA), a wireless modem (modem), a handheld device (handset), a laptop computer (laptop computer), a machine type communication (machine type communication, MTC) terminal device, a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal in telemedicine (remote medical), a wireless terminal device in smart grid (smart grid), a wireless terminal device in transportation safety (transportation safety), a wireless terminal device in a smart city (smart city), a wireless terminal device in a smart home (smart home), a vehicle-mounted terminal device, a roadside unit (roadside unit, RSU) with a terminal device function, or the like. The terminal device in this application may alternatively be a vehicle-mounted module, a vehicle-mounted component, a vehicle-mounted chip, or a vehicle-mounted unit that is built in a vehicle as one or more components or units.

The network device may be a device like an uncrewed aerial vehicle or a high altitude platform, for example, a satellite applicable to the NTN communication shown in FIG. 1 or FIG. 2. Alternatively, the network device may be a terrestrial device, for example, an access network (access network, AN) device, or may be referred to as a radio access network device (radio access network, RAN) device. The RAN device may provide an access function for a terminal, and is responsible for functions on an air interface side, such as radio resource management, quality of service (quality of service, QoS) management, and data compression and encryption. The RAN device may include a gNB in a 5G system, for example, an NR system, or one or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a baseband unit (baseband unit, BBU), or may be a central unit (central unit, CU) or a distributed unit (distributed unit, DU), an RSU with a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next generation mobile communication system, for example, a 6G access network device like a 6G base station. Alternatively, in the next generation mobile communication system, the network device may be named in another manner, which falls within the protection scope of embodiments of this application. This is not limited in this application.

High-speed satellite motion sensed by the terminal device may be divided into two parts: relative motion caused by satellite motion and relative motion caused by earth rotation. For example, in a 48*110 constellation, intra-orbit inter-satellite switching occurs every 50s, and interorbit inter-satellite switching occurs every 30 minutes. In the 48*110 constellation, 48 represents a quantity of orbits of the satellite constellation, and 110 represents a quantity of satellites in an orbit. Both types of switching are highly predictable. When a service requirement remains stable for a period of time, system information of a satellite network may be planned in advance. For example, when a satellite 1 covers a cell of a terminal device at a current moment, with motion caused by satellite motion and earth rotation, satellites such as a satellite 2, a satellite 3, and a satellite 4 cover the cell at subsequent moments. Therefore, the network device may send system information of the satellites to the terminal device in advance, so that the terminal device switches to a corresponding satellite.

The following describes a function of a value tag (valueTag) in system information.

In a communication protocol, the value tag in the system information identifies whether the terminal device re-reads configuration information in the system information. If content of the system information changes, a value of the value tag is changed. The communication protocol specifies that each piece of system information (except a MIB and a SIB 1) includes a value tag field. When content of each piece of system information changes, a value of the value tag may be a value of the value tag in the unchanged system information plus 1. If content of a piece of system information changes, the network device needs to update the system information. The communication protocol specifies that, if a value of a field of a value tag in a piece of system information changes, the terminal device considers that the system information originally stored by the terminal device is invalid, and the terminal device needs to re-read system information broadcast by the network device. If a value of a field of a value tag in a piece of system information remains unchanged, the terminal device does not need to re-read system information broadcast by the network device. In other words, the system information stored by the terminal device is still valid.

The following describes a function of an areaScope identifier in the system information.

The communication protocol specifies that the network device may associate an areaScope identifier with a same type of system information sent by different network devices. For example, a system information block (system information block, SIB1) indicates an areaScope identifier of another SIB. After moving to a new cell, the terminal device compares whether an areaScope identifier of a SIB of the new cell is the same as an areaScope identifier of an original cell. If the areaScope identifier of the SIB of the new cell is the same as the areaScope identifier of the original cell, it indicates that content in a SIB corresponding to the original cell may be reusable. It should be noted that whether the content specifically can be reused further depends on whether values of value tags are the same. If the values are the same, the content can be reused. After camping on or switching to the new cell, the terminal device may reuse a SIB other than a management information block (master information block, MIB), a SIB 1, a SIB6, a SIB7, and a SIB8 in the original cell by using the areaScope identifier. If the areaScope identifier of the SIB of the new cell is different from the areaScope identifier of the original cell, the terminal device needs to read the corresponding SIB of the new cell.

After switching to a new satellite (the new satellite may also be referred to as a new cell) or reselects the new satellite, the terminal device needs to decode a SIB of the new satellite to obtain configuration information of the new satellite. For the terminal device, with relative motion caused by satellite motion and earth rotation, the terminal device may switch between different satellites, so that a satellite provides a corresponding service for the terminal device within a period of time. Therefore, satellites to which the terminal device switches at different time are predictable.

Therefore, to reduce re-reading of system information after the terminal device switches to a satellite (the satellite may also be referred to as a cell) or reselects the satellite, the network device may notify, at a time, the terminal device of configuration information of a satellite that subsequently provides a service for the terminal device. For example, the satellite 1 to a satellite 5 sequentially run to above the terminal device based on an orbit, so that the satellite 1 to the satellite 5 can sequentially provide services for the terminal device. As shown in FIG. 4, the satellite 1 to the satellite 4 provide services for the terminal device. The satellite 1 may send system information a to the terminal device. The system information a includes configuration information respectively corresponding to the satellite 1 to the satellite 4 and an associated value tag 1. As shown in FIG. 4, a value of the value tag 1 is 1. When the satellite 2 provides a service for a cell in which the terminal device is located, the satellite 2 sends system information b. The system information b includes the configuration information respectively corresponding to the satellite 1 to the satellite 4 and an associated value tag 2. Because the configuration information respectively corresponding to the satellite 1 to the satellite 4 does not change, a value of the value tag 2 may also be 1. Similarly, processes of broadcasting system information by the satellite 3 and the satellite 4 are also similar to this. Therefore, after the terminal device switches to a new satellite or reselects the new satellite, the terminal device receives system information sent by the new satellite. If a value tag in the system information is the same as a value tag in system information received by the terminal device before the switching, the terminal device may not read the system information of the new satellite, to achieve effect of reducing power consumption.

Therefore, it can be learned that the satellite 1 broadcasts the configuration information respectively corresponding to the satellite 1 to the satellite 4. For the terminal device, when the cell of the terminal device is served by the satellite 2, configuration information of the satellite 1 broadcast by the satellite 2 is unnecessary. In other words, the satellite 2 broadcasts the configuration information of the satellite 1. When the cell of the terminal device is served by the satellite 3, configuration information of the satellite 2 broadcast by the satellite 3 is unnecessary. When the cell of the terminal device is served by the satellite 4, configuration information of the satellite 4 broadcast by the satellite 4 is also unnecessary. Therefore, that a current satellite broadcasts configuration information of a previous satellite results in unnecessary broadcast information and unnecessary occupation of a broadcast channel. The current satellite is a satellite that currently provides a service for the cell of the terminal device, and the previous satellite is a satellite that provides a service for the cell of the terminal device before the current satellite. However, how to send configuration information of the satellite to the terminal device to reduce a broadcast amount of the configuration information of the satellite is a problem worth considering.

In addition, if the current satellite does not broadcast the configuration information of the previous satellite, in other words, system information broadcast by the current satellite changes compared with system information broadcast by the previous satellite, according to a current NR mechanism, a value tag in the system information broadcast by the current satellite is triggered to change. However, actually, configuration information of the satellite broadcast by the current satellite does not change compared with the configuration information of the satellite broadcast by the previous satellite, and the terminal device does not need to read the system information sent by the current satellite. Therefore, according to the current NR mechanism, the terminal device reads unnecessary system information after switching to a satellite or reselecting the satellite.

This application provides corresponding technical solutions, to reduce an information amount of configuration information delivered by a first network device. Further, a process of reading unnecessary system information by the terminal device is reduced, and an energy consumption loss is reduced.

In this application, for a network device, the network device broadcasts system information at a specific periodicity. Sending moments respectively corresponding to two consecutive times at which the network device sends the system information to the terminal device may be referred to as two adjacent moments.

In this application, for different network devices, two corresponding sending moments at which two adjacent network devices respectively send system information to the terminal device may be referred to as two adjacent moments. Two corresponding sending moments at which two non-adjacent network devices respectively send system information to the terminal device may be referred to as two non-adjacent moments. Optionally, the two adjacent network devices may be two adjacent satellites on a same orbit.

The following describes the technical solutions of this application with reference to specific embodiments.

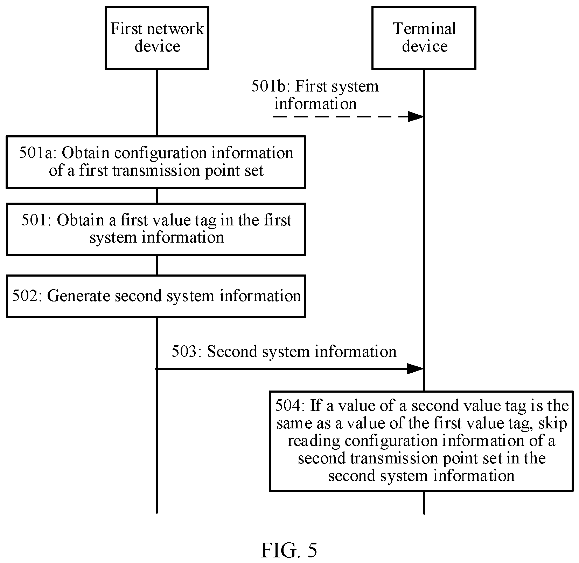

FIG. 5 is a diagram of an embodiment of a communication method according to an embodiment of this application. Refer to FIG. 5. The method includes the following steps.

501: A first network device obtains a first value tag in first system information.

The first value tag is a value tag associated with configuration information of a first transmission point set in the first system information.

Specifically, the first system information includes the configuration information of the first transmission point set and the first value tag. The configuration information of the first transmission point set includes configuration information of a transmission point in the first transmission point set. In other words, the configuration information of the first transmission point set is jointly associated with one value tag, namely, the first value tag.

The configuration information of the first transmission point set includes a configuration of the transmission point in the first transmission point set. For example, a configuration of a transmission point may include a parameter used for cell selection and reselection, a parameter used for cell common physical channel configuration, and the like.

Optionally, the transmission point in the first transmission point set is a radiation point that transmits a signal. The transmission point may be a satellite, a transmission reception point, a cell, a radio frequency port, or the like. This is not specifically limited in this application.

Optionally, the configuration information of the first transmission point set includes service time for which the transmission point in the first transmission point set provides a service for a target object. Optionally, the configuration information of the first transmission point set further includes an identifier of the transmission point in the first transmission point set.

Optionally, the target object may be any one of the following: a target area, a target ground station, a target base station, a target terminal device, or an object in any other possible form. This is not limited. For the target area, the terminal device may be located in the target area. For the target ground station or the target base station, the target ground station or the target base station may provide a service for the terminal device. For the target terminal device, the target terminal device may be the terminal device, or may be another terminal device that obtains a service by using the target terminal device. In this case, the terminal device may also be understood as a relay terminal, and the target terminal device may be understood as a remote terminal device.

Optionally, the configuration information of the first transmission point set further includes service start time of the transmission point in the first transmission point set or service end time of the transmission point in the first transmission point set. In other words, for cells that can provide services for a same target object, for example, transmission points in the first transmission point set, these transmission points can usually provide services for the target object in a time sequence. In this case, transmission points that may provide services for the target object at a time point may also be determined based only on service start time or service end time of these transmission points. Therefore, the configuration information of the first transmission point set may indicate only service start time or service end time at which the transmission point in the first transmission point set provides a service for the target object, so that overheads of the configuration information of the first transmission point set can be further reduced, and communication efficiency can be further improved.

For example, the service start time of the transmission point in the first transmission point set may be time at which the transmission point starts to provide a service for the target object, or time at which the transmission point may start to provide a service for the target object. For example, for a transmission point in the first transmission point set, if the transmission point runs based on an orbit until a beam of the transmission point can irradiate the target object, the transmission point generates a corresponding cell, to start to provide a service for the target object. This time is service start time of the transmission point.

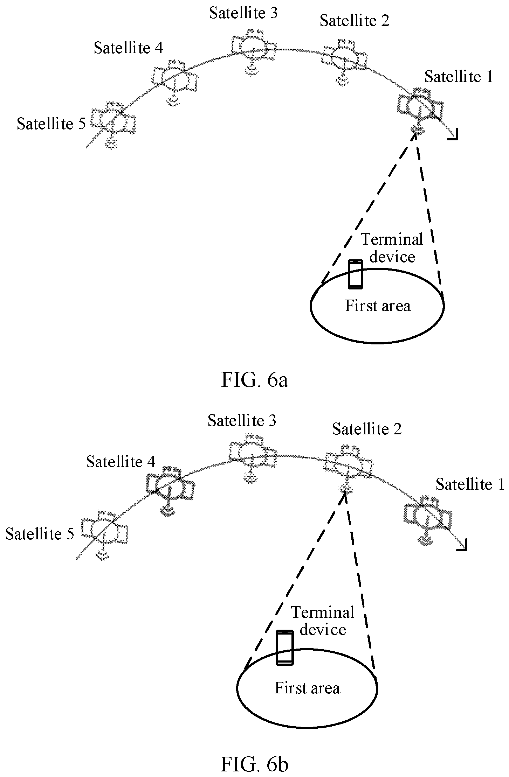

For example, as shown in FIG. 6a, a satellite 1 to a satellite 5 sequentially run to above a first area based on an orbit, so that the satellite 1 to the satellite 5 can sequentially provide communication services for the first area.

The following describes two possible sending manners of the first system information.

Implementation 1: The first system information is sent by a second network device.

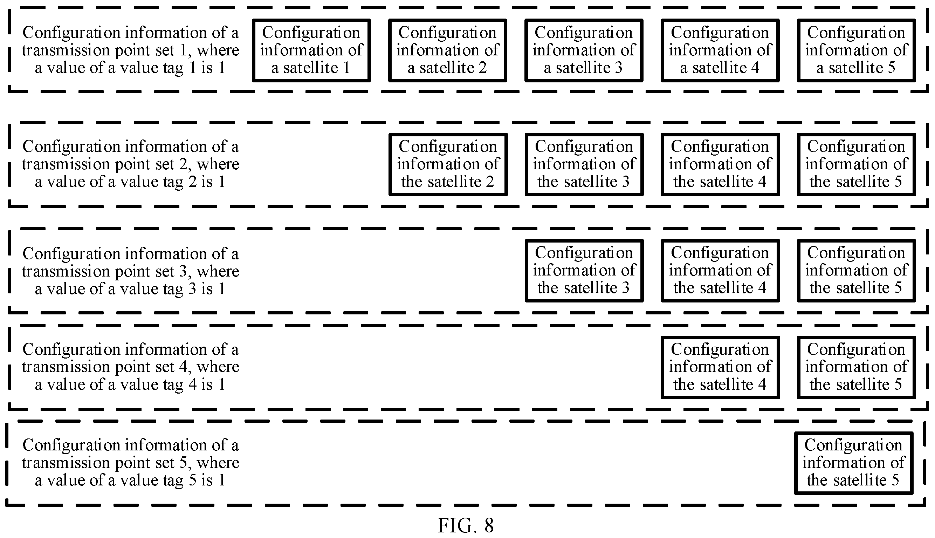

For example, as shown in FIG. 6a and FIG. 8, the target area is the first area, and the second network device is the satellite 1. The first transmission point set is a transmission point set 1, and the first value tag is a value tag 1. The satellite 1 sends the first system information. The first system information includes configuration information of the transmission point set 1 and the value tag 1. The transmission point set 1 includes the satellite 1 to the satellite 5. The configuration information of the transmission point set 1 includes identifiers respectively corresponding to the satellite 1 to the satellite 5, configurations respectively corresponding to the satellite 1 to the satellite 5, and service start time respectively corresponding to the satellite 1 to the satellite 5. A value of the value tag 1 is 1.

Implementation 2: The first system information is sent by the first network device. Specifically, the first system information is sent by the first network device at a first moment.

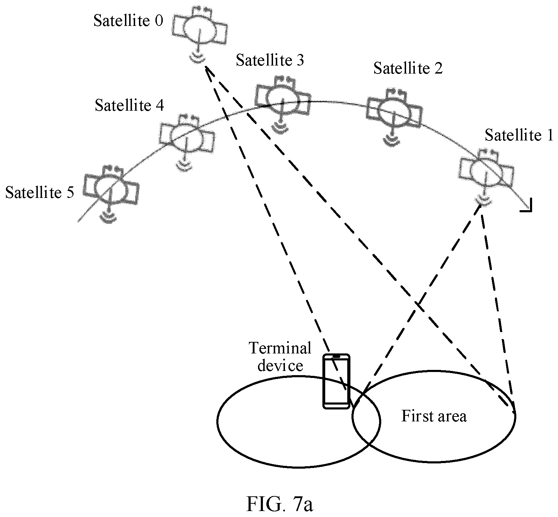

For example, as shown in FIG. 7a and FIG. 8, the first network device is a satellite 0, the first transmission point set is a transmission point set 1, and the first value tag is a value tag 1. The satellite 0 sends the first system information at the first moment. The first system information includes the configuration information of the first transmission point set and the first value tag. The first transmission point set includes the satellite 1 to the satellite 5. The configuration information of the first transmission point set includes identifiers respectively corresponding to the satellite 1 to the satellite 5, configurations respectively corresponding to the satellite 1 to the satellite 5, and service start time respectively corresponding to the satellite 1 to the satellite 5. A value of the first value tag is 1.

Optionally, the embodiment shown in FIG. 5 further includes step 501a. Step 501a may be performed before step 502.

501a: The first network device obtains the configuration information of the first transmission point set.

Optionally, based on Implementation 1, the first network device receives the configuration information of the first transmission point set from the second network device.

For example, as shown in FIG. 6a and FIG. 8, the first network device is the satellite 2, and the second network device is the satellite 1. The first transmission point set is the transmission point set 1, and the first value tag is the value tag 1. The satellite 2 obtains the configuration information of the transmission point set 1 from the satellite 1. The transmission point set 1 includes the satellite 1 to the satellite 5. The configuration information of the transmission point set 1 includes the identifiers respectively corresponding to the satellite 1 to the satellite 5, the configurations respectively corresponding to the satellite 1 to the satellite 5, and the service start time respectively corresponding to the satellite 1 to the satellite 5. The value of the value tag 1 is 1.

Optionally, based on Implementation 2, the first network device obtains the configuration information of the first transmission point set from the transmission point in the first transmission point set.

For example, as shown in FIG. 7a and FIG. 8, the first network device is the satellite 0, the first transmission point set is the transmission point set 1, and the first value tag is the value tag 1. The satellite 0 obtains configuration information of each satellite from the satellite 1 to the satellite 5. Then, the satellite 0 sends the first system information at the first moment, where the first system information includes configuration information of the transmission point set 1 and the value tag 1. The configuration information of the transmission point set 1 includes the identifiers respectively corresponding to the satellite 1 to the satellite 5, the configurations respectively corresponding to the satellite 1 to the satellite 5, and the service start time respectively corresponding to the satellite 1 to the satellite 5. The value of the value tag 1 is 1.

It should be noted that there is no fixed execution sequence between step 501a and step 501. Step 501a may be performed before step 501, step 501 is performed before step 501a, or step 501a and step 501 are simultaneously performed based on a situation. This is not specifically limited in this application.

Optionally, the embodiment shown in FIG. 5 further includes step 501b. Step 501b may be performed before step 503.

501b: The terminal device obtains the first system information.

For the first system information, refer to the foregoing related descriptions.

Based on Implementation 1, optionally, the terminal device receives the first system information from the second network device.

For example, as shown in FIG. 6a, the second network device is the satellite 1, and the terminal device receives the first system information from the satellite 1.

Based on Implementation 2, optionally, the terminal device receives the first system information from the first network device.

For example, as shown in FIG. 7a, the first network device is the satellite 0, and the terminal device receives the first system information from the satellite 0.

502: The first network device generates second system information.

The second system information includes configuration information of a second transmission point set and a second value tag associated with the configuration information of the second transmission point set.

The configuration information of the second transmission point set includes a configuration of a transmission point in the second transmission point set. For example, a configuration of a transmission point may include a parameter used for cell selection and reselection, a parameter used for cell common physical channel configuration, and the like.

Optionally, the configuration information of the second transmission point set includes service time for which the transmission point in the second transmission point set provides a service for the target object. Optionally, the configuration information of the second transmission point set further includes an identifier of the transmission point in the second transmission point set. For the target object and the service time, refer to the foregoing related descriptions. Details are not described herein again.

The second transmission point set is a proper subset of the first transmission point set, and a value of the second value tag is the same as the value of the first value tag.

For example, as shown in FIG. 8, the first transmission point set is the transmission point set 1, and the second transmission point set is a transmission point set 2. The transmission point set 2 includes the satellite 2, the satellite 3, the satellite 4, and the satellite 5. The transmission point set 1 includes the satellite 1, the satellite 2, the satellite 3, the satellite 4, and the satellite 5. Therefore, it can be learned that the transmission point set 2 is the proper subset of the transmission point set 1.

Therefore, it can be learned that, when the second transmission point set is the proper subset of the first transmission point set, the value of the second value tag may be the same as the value of the first value tag. In this way, the terminal device does not read the configuration information in the second system information, to reduce energy consumption of reading the system information by the terminal device.

Optionally, configuration information of each transmission point in the second transmission point set in the second system information is a subset of configuration information of the transmission point in the first system information.

For example, the configuration information of each transmission point in the second transmission point set in the second system information is the same as the configuration information of the transmission point in the first system information. In other words, the configuration information of the transmission point in the second system information is the subset of the configuration information of the transmission point in the first system information.

For example, configuration information of a transmission point 1 in the second transmission point set in the second system information includes a parameter A and a parameter B. Configuration information of the transmission point 1 in the first system information includes the parameter A, the parameter B, and a parameter C. Therefore, it can be learned that the configuration information of the transmission point 1 in the second system information is a proper subset of the configuration information of the transmission point 1 in the first system information.

Optionally, the first system information is sent by the second network device, and the second system information is sent by the first network device.

The second network device is a previous network device of the first network device. In other words, the second network device is a network device that provides a service for the target object after the first network device. The first network device and the second network device are adjacent network devices.

Specifically, the first system information is sent by the second network device at the first moment, and the second system information is sent by the first network device at a second moment. The first moment is a moment before the second moment.

For example, as shown in FIG. 6a, FIG. 6b, and FIG. 8, the target area is the first area, the first network device is the satellite 2, and the second network device is the satellite 1. The first transmission point set is the transmission point set 1, and the first value tag is the value tag 1. The second transmission point set is the transmission point set 2, and the second value tag is a value tag 2. As shown in FIG. 6a or FIG. 6b, the satellite 1 and the satellite 2 are adjacent satellites, and the satellite 1 is a previous satellite of the satellite 2. The satellite 1 sends the first system information at the first moment. The first system information includes the configuration information of the transmission point set 1 and the value tag 1. As shown in FIG. 8, the transmission point set 1 includes the satellite 1 to the satellite 5. The configuration information of the transmission point set 1 includes the identifiers respectively corresponding to the satellite 1 to the satellite 5, the configurations respectively corresponding to the satellite 1 to the satellite 5, and the service start time respectively corresponding to the satellite 1 to the satellite 5. The value of the value tag 1 is 1. The satellite 2 sends the second system information at the second moment. The second system information includes configuration information of the transmission point set 2 and the value tag 2. As shown in FIG. 8, the transmission point set 2 includes the satellite 2 to a satellite 6. Therefore, it can be learned that the transmission point set 2 is the proper subset of the transmission point set 1. In a process of the first area being covered by the satellite 1 to being covered by the satellite 2, configuration information of each of the satellite 2 to the satellite 6 in the second system information is the same as configuration information of the satellite in the first system information. Therefore, a value of the value tag 2 associated with the configuration information of the transmission point set 2 may be the same as the value of the value tag 1, that is, the value is 1. In other words, in the process of the first area being covered by the satellite 1 to being covered by the satellite 2, configuration information respectively corresponding to the satellite 2 to the satellite 6 does not change. Therefore, the first network device may set the value of the value tag 2 to be the same as the value of the value tag 1. In this way, the terminal device does not re-read the configuration information in the second system information, to reduce power consumption of reading the configuration information by the terminal device.

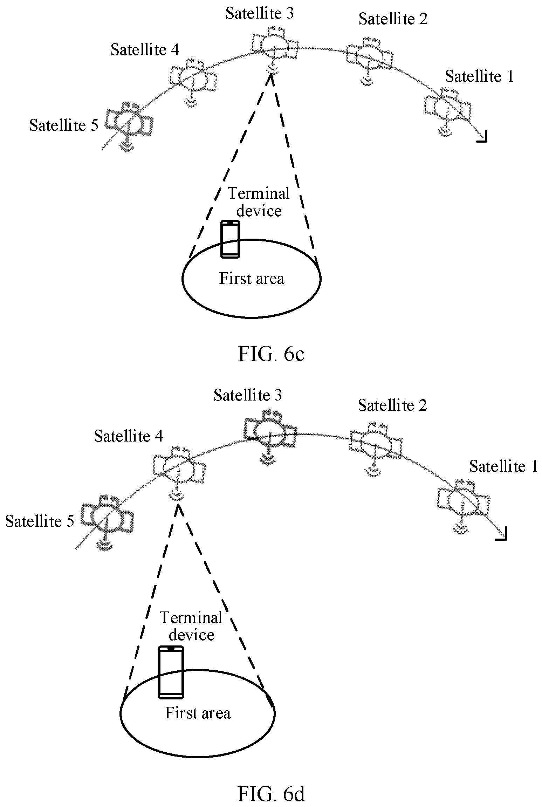

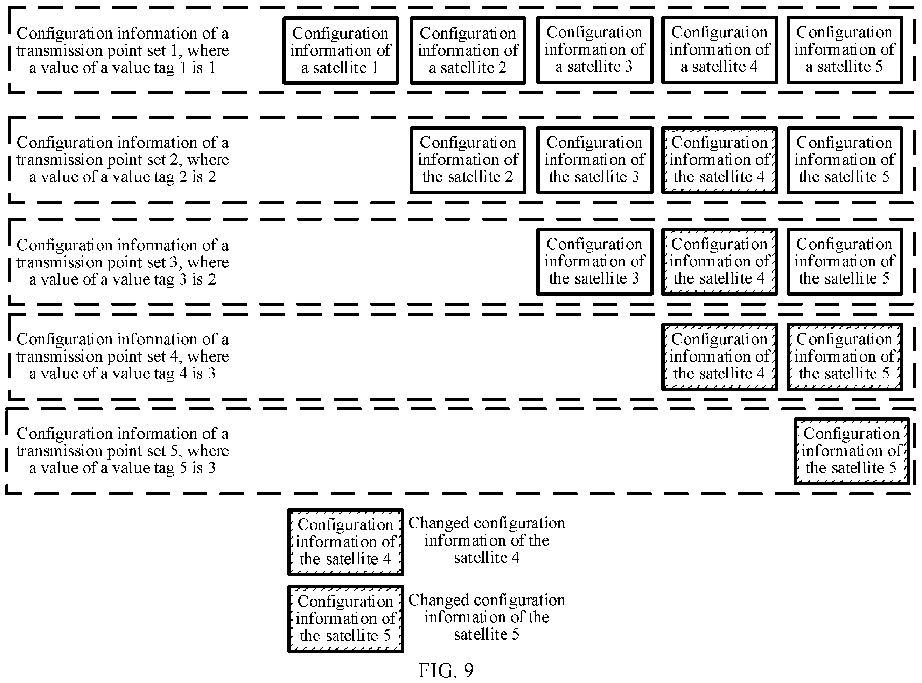

For example, as shown in FIG. 6b, FIG. 6c, and FIG. 9, the target area is the first area, the first network device is the satellite 3, and the second network device is the satellite 2. The first transmission point set is the transmission point set 2, and the first value tag is the value tag 2. The second transmission point set is a transmission point set 3, and the second value tag is a value tag 3. As shown in FIG. 6b or FIG. 6c, the satellite 2 and the satellite 3 are adjacent satellites, and the satellite 2 is a previous satellite of the satellite 3. The satellite 2 sends the first system information at the first moment. The first system information includes the configuration information of the transmission point set 2 and the value tag 2. As shown in FIG. 9, the transmission point set 2 includes the satellite 2 to the satellite 5. The configuration information of the transmission point set 2 includes the identifiers respectively corresponding to the satellite 2 to the satellite 5, the configurations respectively corresponding to the satellite 2 to the satellite 5, and the service start time respectively corresponding to the satellite 2 to the satellite 5. The value of the value tag 2 is 2. The satellite 3 sends the second system information at the second moment. The second system information includes configuration information of the transmission point set 3 and the value tag 3. As shown in FIG. 8, the transmission point set 2 includes the satellite 3 to the satellite 5. Therefore, it can be learned that the transmission point set 3 is a proper subset of the transmission point set.

In a process of the first area being covered by the satellite 2 to being covered by the satellite 3, configuration information of each of the satellite 3 to the satellite 5 in the second system information is the same as configuration information of the satellite in the first system information. Therefore, a value of the value tag 3 associated with the configuration information of the transmission point set 3 may be the same as the value of the value tag 2, that is, the value is 2. In other words, in the process of the first area being covered by the satellite 2 to being covered by the satellite 3, the configuration information respectively corresponding to the satellite 3 to the satellite 5 does not change. Therefore, the first network device may set the value of the value tag 3 to be the same as the value of the value tag 2. In this way, the terminal device does not re-read the configuration information in the second system information, to reduce power consumption of reading the configuration information by the terminal device.

Optionally, the first system information is sent by the first network device at the first moment, and the second system information is sent by the first network device at a second moment. The first moment is a moment before the second moment.

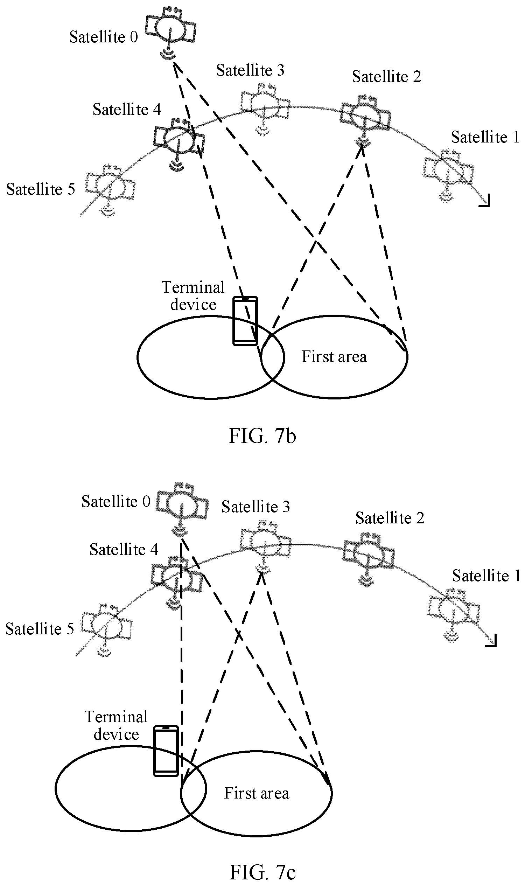

For example, as shown in FIG. 7a, FIG. 7b, and FIG. 8, the target area is the first area, and the first network device is the satellite 0. The first transmission point set is the transmission point set 1, and the second transmission point set is the transmission point set 2. The satellite 0 sends the first system information at the first moment. The first system information includes the configuration information of the transmission point set 1 and the value tag 1. As shown in FIG. 8, the transmission point set 1 includes the satellite 1 to the satellite 5. The configuration information of the transmission point set 1 includes the identifiers respectively corresponding to the satellite 1 to the satellite 5, the configurations respectively corresponding to the satellite 1 to the satellite 5, and the service start time respectively corresponding to the satellite 1 to the satellite 5. The value of the value tag 1 is 1. The satellite 0 sends the second system information at the second moment. The first moment is the moment before the second moment. The second system information includes configuration information of the transmission point set 2 and the value tag 2. As shown in FIG. 8, the transmission point set 2 includes the satellite 2 to the satellite 5. Therefore, it can be learned that the transmission point set 2 is the proper subset of the transmission point set 1. In a process of the first area being covered by the satellite 1 to being covered by the satellite 2, configuration information of each of the satellite 2 to the satellite 5 in the second system information is the same as configuration information of the satellite in the first system information. In other words, in the process of the first area being covered by the satellite 1 to being covered by the satellite 2, the configuration information corresponding to the satellite 2 to the satellite 5 does not change. Therefore, the first network device may set the value of the second value tag to be the same as the value of the first value tag. In this way, the terminal device does not re-read the configuration information in the second system information, to reduce power consumption of reading the configuration information by the terminal device.

For example, as shown in FIG. 7b, FIG. 7c, and FIG. 9, the target area is the first area, and the first network device is the satellite 0. The first transmission point set is the transmission point set 2, and the second transmission point set is a transmission point set 3. The satellite 0 sends the first system information at the first moment. The first system information includes the configuration information of the transmission point set 2 and the value tag 2. As shown in FIG. 9, the transmission point set 2 includes the satellite 2 to the satellite 5. The configuration information of the transmission point set 1 includes the identifiers respectively corresponding to the satellite 2 to the satellite 5, the configurations respectively corresponding to the satellite 2 to the satellite 5, and the service start time respectively corresponding to the satellite 2 to the satellite 5. The value of the value tag 2 is 2. The satellite 0 sends the second system information at the second moment. The first moment is the moment before the second moment. The second system information includes configuration information of the transmission point set 3 and the value tag 3. As shown in FIG. 9, the transmission point set 3 includes the satellite 3 to the satellite 5. Therefore, it can be learned that the transmission point set 3 is a proper subset of the transmission point set 2. In a process of the first area being covered by the satellite 2 to being covered by the satellite 3, configuration information of each of the satellite 3 to the satellite 5 in the second system information is the same as configuration information of the satellite in the first system information. In other words, in the process of the first area being covered by the satellite 2 to being covered by the satellite 3, the configuration information respectively corresponding to the satellite 3 to the satellite 5 does not change. Therefore, the first network device may set the value of the second value tag to be the same as the value of the first value tag. In this way, the terminal device does not re-read the configuration information in the second system information, to reduce power consumption of reading the configuration information by the terminal device.

Optionally, a same type of configuration information of different transmission points in the second transmission point set is associated with a same areaSope identifier. In this way, the terminal device obtains the configuration information that is of the same type and that is of the different transmission points for reuse.

It should be noted that, if the second transmission point set is not the proper subset of the first transmission point set, the value of the second value tag is different from the value of the first value tag. Alternatively, if the second transmission point set is the proper subset of the first transmission point set, and configuration information of at least one transmission point in the second transmission point set in the second system information is not a subset of configuration information of the at least one transmission point in the first system information, the value of the second value tag is different from the value of the first value tag. For example, the second value tag may be the value of the first value tag plus 1.

For example, as shown in FIG. 6c, FIG. 6d, and FIG. 9, the target area is the first area, the first network device is the satellite 3, and the second network device is the satellite 4. The first transmission point set is the transmission point set 3, and the second transmission point set is a transmission point set 4. The first value tag is the value tag 3, and the second value tag is a value tag 4. As shown in FIG. 6c or FIG. 6d, the satellite 3 and the satellite 4 are adjacent satellites, and the satellite 3 is a previous satellite of the satellite 4. The satellite 3 sends the first system information, where the first system information includes the configuration information of the transmission point set 3 and the value tag 3. As shown in FIG. 9, the configuration information of the transmission point set 3 includes the identifiers respectively corresponding to the satellite 3 to the satellite 5, the configuration information respectively corresponding to the satellite 3 to the satellite 5, and the service start time respectively corresponding to the satellite 3 to the satellite 5. The satellite 4 sends the second system information, where the second system information includes configuration information of a transmission point 4 and the value tag 4. As shown in FIG. 9, the transmission point set 4 includes the satellite 4 and the satellite 5. Configuration information of the satellite 5 in the second system information changes compared with configuration information of the satellite 5 in the first system information. Alternatively, accurately, the configuration information of the satellite 5 in the second system information is not a subset of the configuration information of the satellite 5 in the first system information. For example, the configuration information of the satellite 5 in the second system information includes the parameter A and the parameter B, and the configuration information of the satellite 5 in the first system information includes the parameter A and the parameter C. Therefore, it can be learned that the configuration information of the satellite 5 in the second system information is not the subset of the satellite 5 in the first system information. Therefore, a value of the value tag 4 is different from the value of the value tag 3. For example, the value of the value tag 4 may be 3, namely, the value of the value tag 3 plus 1. In other words, because of running in the orbit, in a process of the first area being covered by the satellite 3 to being covered by the satellite 4, configuration information of the satellite 4 changes. Therefore, the first network device may set the value tag 4 to a value different from the value of the value tag 3, so that the terminal device obtains the configuration information in the second system information, and the terminal device correctly switches to the satellite 4.

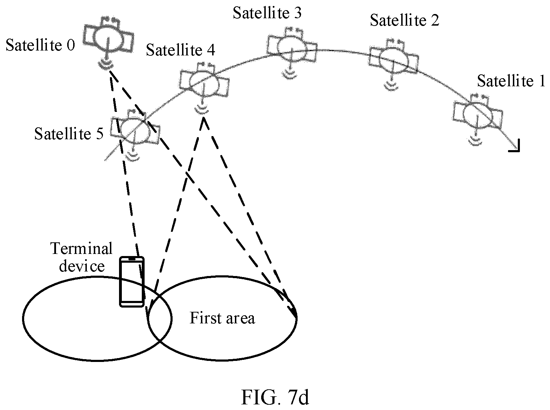

For example, as shown in FIG. 7c, FIG. 7d, and FIG. 9, the target area is the first area, and the first network device is the satellite 0. The first transmission point set is the transmission point set 3, and the second transmission point set is a transmission point set 4. The first value tag is the value tag 3, and the second value tag is the value tag 4. As shown in FIG. 7c or FIG. 7d, the satellite 3 and the satellite 4 are adjacent satellites, and the satellite 3 is a previous satellite of the satellite 4. The satellite 0 sends the first system information at the first moment, where the first system information includes the configuration information of the transmission point set 3 and the value tag 3. As shown in FIG. 9, the configuration information of the transmission point set 3 includes the identifiers respectively corresponding to the satellite 3 to the satellite 5, the configuration information respectively corresponding to the satellite 3 to the satellite 5, and the service start time respectively corresponding to the satellite 3 to the satellite 5. The satellite 0 sends the second system information at the second moment, and the first moment is the moment before the second moment. The second system information includes configuration information of a transmission point 4 and the value tag 4. As shown in FIG. 9, the transmission point set 4 includes the satellite 4 and the satellite 5. Configuration information of the satellite 5 in the second system information changes compared with configuration information of the satellite 5 in the first system information. Alternatively, the configuration information of the satellite 5 in the second system information is not a subset of the satellite 5 in the first system information. Therefore, the value of the value tag 4 is different from the value of the value tag 3. For example, the value of the value tag 4 may be 3, namely, the value of the value tag 3 plus 1. In other words, because of running in the orbit, in a process of the first area being covered by the satellite 3 to being covered by the satellite 4, configuration information of the satellite 4 changes. Therefore, the first network device may set the value tag 4 to a value different from the value of the value tag 3, so that the terminal device obtains the configuration information in the second system information, and the terminal device correctly switches to the satellite 4.

Optionally, the third transmission point set is a proper subset of the first transmission point set. Specifically, the first network device obtains third system information, where the third system information includes configuration information of the third transmission point set and a fourth value tag.

The following describes two sending manners of the third system information.

Implementation 1: The third system information is sent by a third network device.

Specifically, the first system information is sent by the second network device, the second system information is sent by the first network device, and the third system information is sent by the third network device.

In a possible implementation, if the second network device is a network device that is after the first network device and that is adjacent to the first network device, the third network device is a network device before the first network device.

Specifically, the first system information is sent by the second network device at the first moment, the second system information is sent by the first network device at the second moment, and the third system information is sent by the third network device at a third moment. The first moment is a moment before the second moment, and the third moment is a moment before the first moment.

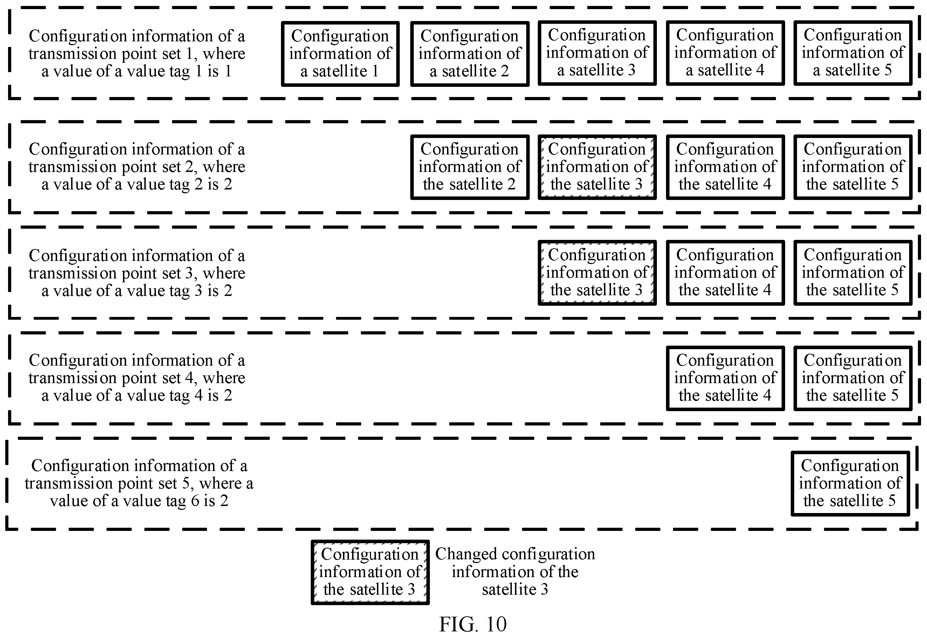

For example, as shown in FIG. 6c, the first network device is the satellite 3, the second network device is the satellite 4, and the third network device is the satellite 1 or the satellite 2. For example, an example in which the third network device is the satellite 1 is used herein for description. The satellite 3 is a satellite before the satellite 4, and the satellite 3 and the satellite 4 are adjacent satellites. As shown in FIG. 10, the first transmission point set is the transmission point set 3, the second transmission point set is the transmission point set 4, and the third transmission point set is the transmission point set 1. The first value tag is the value tag 3, the second value tag is a tag 4, and the fourth value tag is the value tag 1.

The third system information includes the configuration information of the transmission point set 1 and the value tag 1, and the configuration information of the transmission point set 1 includes configuration information respectively corresponding to the satellite 1 to the satellite 5. The value of the value tag 1 is 1. The first system information includes the configuration information of the transmission point set 3 and the value tag 3, and the configuration information of the transmission point set 3 includes the configuration information respectively corresponding to the satellite 3 to the satellite 5. The value of the value tag 3 is 2. The second system information includes configuration information of the transmission point set 4 and the value tag 4, and the configuration information of the transmission point set 4 includes the configuration information respectively corresponding to the satellite 4 and the satellite 5. It can be learned that the transmission point set 4 is a proper subset of the transmission point set 3, and the transmission point set 4 is a proper subset of the transmission point set 1. Because configuration information of each of the satellite 4 and the satellite 5 in the second system information is a subset of the satellite in the first system information, the value of the value tag 4 may be the same as the value of the value tag 3, in other words, the value of the value tag 4 may be 2.

In this implementation, optionally, the first network device receives the third system information from the third network device.

In another possible implementation, if the second network device is a network device that is after the first network device and that is not adjacent to the first network device, the third network device is a network device that is before the second network device and that is adjacent to the second network device.

Specifically, the first system information is sent by the second network device at the first moment, the second system information is sent by the first network device at the second moment, and the third system information is sent by the third network device at a third moment. The first moment is a moment that is before the second moment and that is not adjacent to the second moment, and the third moment is a moment that is before the second moment and that is adjacent to the second moment.

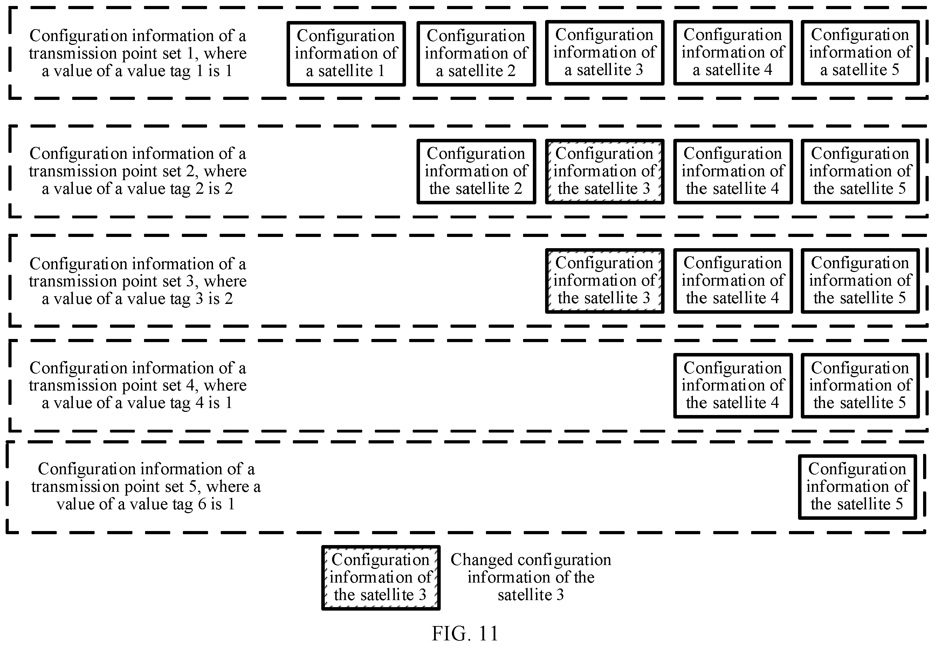

For example, as shown in FIG. 6c, the first network device is the satellite 1, the second network device is the satellite 4, and the third network device is the satellite 3. The satellite 4 is after the satellite 3 and is adjacent to the satellite 3, and the satellite 4 is after the satellite 1 and is not adjacent to the satellite 1. As shown in FIG. 11, the first transmission point set is the transmission point set 1, the second transmission point set is the transmission point set 4, and the third transmission point set is the transmission point set 3. The first value tag is the value tag 1, the second value tag is the value tag 4, and the third value tag is the value tag 3.

The first system information includes the configuration information of the transmission point set 1 and the value tag 1. The configuration information of the transmission point set 1 includes configuration information respectively corresponding to the satellite 1 to the satellite 5. The value of value tag 1 is 1. The third system information includes the configuration information of the transmission point set 3 and the value tag 3. The configuration information of the transmission point set 3 includes the configuration information respectively corresponding to the satellite 3 to the satellite 5. The value of value tag 3 is 2. The second system information includes configuration information of the transmission point set 4 and the value tag 4, and the configuration information of the transmission point set 3 includes configuration information of the satellite 4 and configuration information of the satellite 5. It can be learned that the transmission point set 4 is a proper subset of the transmission point set 3, and the transmission point set 4 is a proper subset of the transmission point set 1. Because the configuration information of each of the satellite 4 and the satellite 5 in the second system information is a subset of the satellite in the first system information, the value of the value tag 4 may be the same as the value of the value tag 1, in other words, the value of the value tag 1 may be 1.

Implementation 2: The third system information is sent by the first network device at a third moment.

Specifically, the first system information is sent by the first network device at the first moment, the second system information is sent by the first network device at the second moment, and the third system information is sent by the first network device at the third moment.

In a possible implementation, if the first moment is a moment before the second moment, the third moment is a moment before the first moment.

For example, as shown in FIG. 7c, the first network device is the satellite 0. As shown in FIG. 10, the satellite 0 sends the first system information at the first moment, and the first system information includes the configuration information of the transmission point set 3 and the value tag 3. The satellite 0 sends the second system information at the second moment, where the second system information includes configuration information of the transmission point set 4 and the value tag 4. The satellite 0 sends the third system information at the third moment, where the third system information includes the configuration information of the transmission point set 1 and the value tag 1. It can be learned that the transmission point set 4 is a proper subset of the transmission point set 3, and the transmission point set 4 is a proper subset of the transmission point set 1. Because configuration information of each of the satellite 4 and the satellite 5 in the second system information is a subset of the satellite in the first system information, the value of the value tag 4 may be the same as the value of the value tag 3, in other words, the value of the value tag 4 may be 2.

In another possible implementation, if the first moment is a moment that is before the second moment and that is not adjacent to the second moment, the third moment is a moment that is before the second moment and that is adjacent to the second moment.

For example, as shown in FIG. 7c, the first network device is the satellite 0. As shown in FIG. 11, the satellite 0 sends the first system information at the first moment, and the first system information includes the configuration information of the transmission point set 1 and the value tag 1. The satellite 0 sends the second system information at the second moment, where the second system information includes configuration information of the transmission point set 4 and the value tag 4. The satellite 0 sends the third system information at the third moment, where the third system information includes the configuration information of the transmission point set 3 and the value tag 3. It can be learned that the transmission point set 4 is a proper subset of the transmission point set 3, and the transmission point set 4 is a proper subset of the transmission point set 1. Because configuration information of each of the satellite 4 and the satellite 5 in the second system information is a subset of the satellite in the third system information, the value of the value tag 4 may be the same as the value of the value tag 1, in other words, the value of the value tag 1 may be 1.

In this implementation, optionally, the third network device obtains the third system information from a transmission point in the third transmission point set. The third system information includes the configuration information of the third transmission point set and the fourth value tag.

Based on Implementation 1 or Implementation 2, it can be learned that, optionally, the second transmission point set is a proper subset of the first transmission point set, the second transmission point set is a proper subset of the third transmission point set, and the value of the second value tag may be the same as the value of the first value tag. The configuration information of each transmission point in the second transmission point set in the second system information is the subset of the configuration information of the transmission point in the first system information. The configuration information of each transmission point in the second transmission point set in the second system information is a subset of configuration information of the transmission point in the third system information.

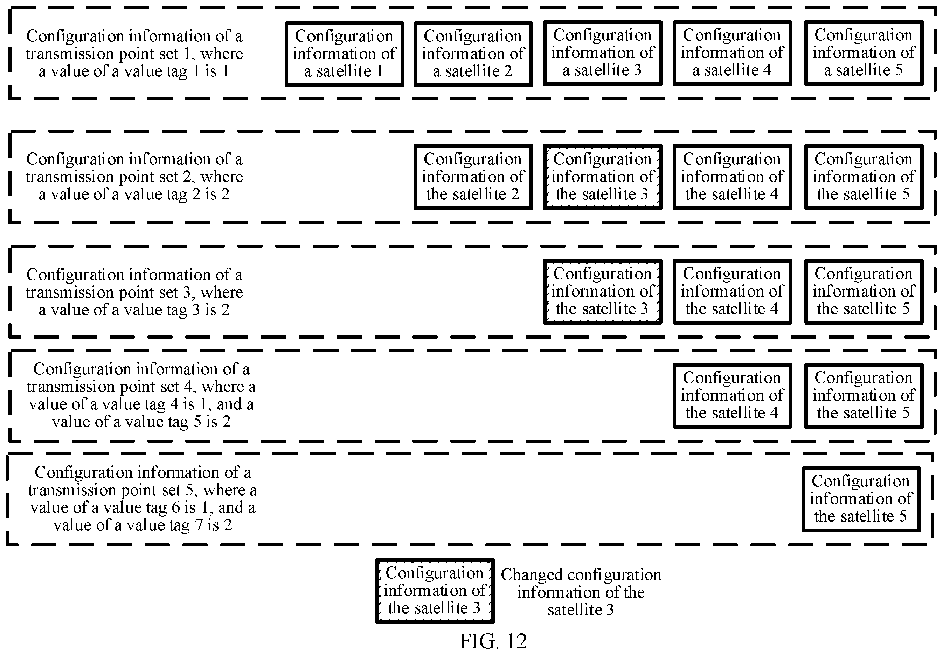

Optionally, the configuration information of the second transmission point set is further associated with the third value tag, a value of the third value tag is the same as a value of the fourth value tag in the third system information, and the fourth value tag is a value tag associated with the configuration information of the third transmission point set. For example, as shown in FIG. 12, the second transmission point set is the transmission point set 4, the transmission point set 4 is the proper subset of the transmission point set 3, and the transmission point set 4 is the proper subset of the transmission point set 1. The configuration information of the transmission point set 4 is associated with the value tag 4 and a value tag 5. The value of the value tag 4 is 1, and a value of the value tag 5 is 2.

503. The first network device sends the second system information. Correspondingly, the terminal device receives the second system information from the first network device.

For example, as shown in FIG. 6b, the first network device is the satellite 2, the terminal device is located in the first area, and the terminal device may receive the second system information from the satellite 2.

For example, as shown in FIG. 7b, the first network device is the satellite 0, the terminal device is located outside the first area, and the terminal device may receive the second system information from the satellite 0.

It should be noted that the first area may be an area covered by a serving cell in which the terminal device is located. Alternatively, the first area is an area covered by a neighboring cell of the terminal device. For example, as shown in FIG. 6b, the first area may be the area covered by the serving cell of the terminal device. For example, as shown in FIG. 7b, the first area may be the area covered by the neighboring cell of the terminal device.

504: If the value of the second value tag is the same as the value of the first value tag, the terminal device skips reading the configuration information of the second transmission point set in the second system information.

If the terminal device determines that the value of the second value tag in the second system information is the same as the value of the first value tag in the first system information, the terminal device does not read the configuration information of the second transmission point set in the second system information, to reduce power consumption of reading the configuration information by the terminal device.

For example, as shown in FIG. 8, the first system information includes the configuration information of the transmission point set 1 and the value tag 1. The second system information includes the configuration information of the transmission point set 2 and the value tag 2. The terminal device determines that the value of the value tag 1 is the same as the value of the value tag 2. In this case, the terminal device may not read the configuration information of the transmission point set 2 in the second system information.

Optionally, the terminal device stores the second value tag, so that when subsequently receiving system information sent by a network side again, the terminal device may determine, with reference to the value of the second value tag, whether to read configuration information in the system information.

It should be noted that, if the value of the second value tag is different from the value of the first value tag, the terminal device reads the configuration information of the second transmission point set in the second system information. Optionally, the terminal device stores the configuration information of the second transmission point set and the second value tag.

For example, as shown in FIG. 10, the first system information includes the configuration information of the transmission point set 1 and the value tag 1. The second system information includes the configuration information of the transmission point set 2 and the value tag 2. It can be learned from FIG. 10 that configuration information of the satellite 2 changes, in other words, configuration information of the satellite 2 in the second system information is not a subset of configuration information of the satellite 2 in the first system information, or the configuration information of the satellite 2 in the second system information is different from the configuration information of the satellite 2 in the first system information. Therefore, the value of the value tag 1 is different from the value of the value tag 2. As shown in FIG. 10, the value of the value tag 1 is 1, and the value of the value tag is 2. Therefore, the terminal device may determine to read the configuration information of the transmission point set 2 in the second system information, to obtain latest configuration information of the transmission point in the transmission point set 2.

Optionally, the third transmission point set is the proper subset of the first transmission point set. The third system information includes the configuration information of the third transmission point set and the fourth value tag. For the third system information, refer to related descriptions in step 502.

Specifically, the terminal device obtains the third system information. Based on Implementation 1 of the third system information in step 502, optionally, the terminal device receives the third system information from the third network device. Based on the implementation of the third system information in step 502, optionally, the terminal device receives the third system information from the first network device.

Optionally, step 504 specifically includes: If the value of the second value tag is the same as the value of one of the first value tag and the fourth value tag, the terminal device skips reading the configuration information of the second transmission point set in the second system information, where the fourth value tag is a value tag associated with the configuration information of the third transmission point set in the third system information.

For example, as shown in FIG. 10, the third system information includes the configuration information of the transmission point set 1 and the value tag 1. The first system information includes the configuration information of the transmission point set 3 and the value tag 3. The second system information includes the configuration information of the transmission point set 4 and the value tag 4. It can be learned from FIG. 10 that the value of the value tag 4 is the same as the value of the value tag 3. Therefore, the terminal device may not read the configuration information of the transmission point set 4 in the second system information. Optionally, the terminal device stores the value tag 4.

For example, as shown in FIG. 11, the third system information includes the configuration information of the transmission point set 1 and the value tag 1. The first system information includes the configuration information of the transmission point set 3 and the value tag 3. The second system information includes the configuration information of the transmission point set 4 and the value tag 4. It can be learned from FIG. 10 that the value of the value tag 4 is the same as the value of the value tag 1. Therefore, the terminal device may not read the configuration information of the transmission point set 4 in the second system information. Optionally, the terminal device stores the value tag 4.

Therefore, it can be learned that the second transmission point set is the proper subset of the first transmission point set, the second transmission point set is the proper subset of the third transmission point set, and the value of the second value tag may be the same as the value of the first value tag. The configuration information of each transmission point in the second transmission point set in the second system information is the subset of the configuration information of the transmission point in the first system information. The configuration information of each transmission point in the second transmission point set in the second system information is a subset of configuration information of the transmission point in the third system information.

The foregoing describes an implementation process of the terminal device by using the first system information, the second system information, and the third system information as an example. During actual application, after the terminal device receives new system information, if the terminal device determines that a value of a value tag in the new system information is the same as a value of a value tag that has been stored by the terminal device, the terminal device may not read configuration information in the new system information. Optionally, the terminal device may store a value tag in the new system information.

Optionally, the configuration information of the second transmission point set is further associated with the third value tag. If the value of the second value tag is the same as the value of the first value tag, the value of the third value tag is the same as the value of the fourth value tag. If the value of the second value tag is the same as the value of the fourth value tag, the value of the third value tag is the same as the value of the first value tag.

For example, as shown in FIG. 12, the third system information includes the configuration information of the transmission point set 1 and the value tag 1. The first system information includes the configuration information of the transmission point set 3 and the value tag 3. The second system information includes the configuration information of the transmission point set 4, the value tag 4, and the value tag 5. It can be learned from FIG. 10 that the value of the value tag 4 is the same as the value of the value tag 1, and the value of the value tag 5 is the same as the value of the value tag 3.

It should be noted that, in the foregoing embodiments, the technical solutions of this application are described mainly by using an example in which a network device is a satellite. During actual application, the network device may alternatively be a ground base station, a high altitude base station, or the like. This is not specifically limited in this application. For a form of the network device, refer to the foregoing related descriptions.

In embodiments of this application, the first network device obtains the first value tag in the first system information. The first value tag is the value tag associated with the configuration information of the first transmission point set in the first system information. The first network device generates the second system information. The second system information includes the configuration information of the second transmission point set and the second value tag associated with the configuration information of the second transmission point set, the second transmission point set is the proper subset of the first transmission point set, and the value of the second value tag is the same as the value of the first value tag. The first network device sends the second system information. Therefore, it can be learned that the second transmission point set is the proper subset of the first transmission point set, and the first network device may send only the configuration information of the second transmission point set, and does not need to deliver all the configuration information of the first transmission point set again, so that an information amount of configuration information delivered by the first network device is reduced. Further, the second transmission point set is the proper subset of the first transmission point set, and the value of the second value tag is the same as the value of the first value tag. The terminal device determines, based on the value of the first value tag, that the configuration information of the second transmission point set in the second system information does not need to be read. In this way, a process of reading unnecessary configuration information by the terminal device is reduced, and power consumption of the terminal device is reduced.

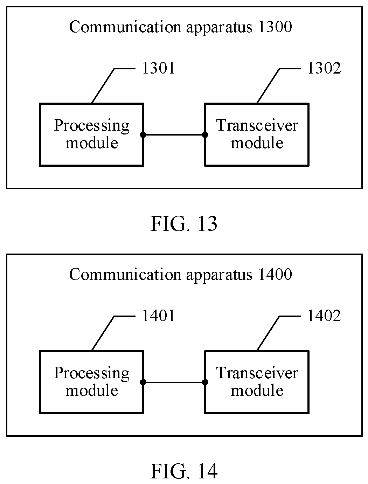

The following describes a communication apparatus provided in embodiments of this application. FIG. 13 is a diagram of a first structure of a communication apparatus according to an embodiment of this application. The communication apparatus may be configured to perform the steps performed by the first network device in the embodiment shown in FIG. 5. For details, refer to the related descriptions in the foregoing method embodiment.

The communication apparatus 1300 includes a processing module 1301 and a transceiver module 1302.

The processing module 1301 is configured to: obtain a first value tag in first system information, where the first value tag is a value tag associated with configuration information of a first transmission point set in the first system information; and generate second system information, where the second system information includes configuration information of a second transmission point set and a second value tag associated with the configuration information of the second transmission point set, the second transmission point set is a proper subset of the first transmission point set, and a value of the second value tag is the same as a value of the first value tag.

The transceiver module 1302 is configured to send the second system information.

In a possible implementation, configuration information of each transmission point in the second transmission point set in the second system information is a subset of configuration information of the transmission point in the first system information.

In another possible implementation, the processing module 1301 is further configured to obtain the configuration information of the first transmission point set.

In another possible implementation, the first system information is sent by the communication apparatus 1300, or the first system information is sent by a second network device.

In another possible implementation, the first system information is sent by the communication apparatus 1300 at a first moment, the second system information is sent by the communication apparatus 1300 at a second moment, and the first moment is a moment before the second moment, or the first moment is a moment that is before the second moment and that is not adjacent to the second moment. Alternatively, the second network device is a network device that is before the communication apparatus 1300 and that is adjacent to the communication apparatus 1300, or the second network device is a network device that is before the communication apparatus 1300 and that is not adjacent to the communication apparatus 1300.

In another possible implementation, the second transmission point set is a proper subset of a third transmission point set, and the third system information includes configuration information of the third transmission point set.

In a possible implementation, the configuration information of the second transmission point set is further associated with a third value tag, a value of the third value tag is the same as a value of a fourth value tag in the third system information, and the fourth value tag is a value tag associated with the configuration information of the third transmission point set. Configuration information of each transmission point in the second transmission point set in the second system information is a subset of configuration information of the transmission point in the third system information.

In another possible implementation, the third system information is sent by the communication apparatus 1300 at a third moment. If the first moment is the moment before the second moment, the third moment is a moment before the first moment. Alternatively, if the first moment is the moment that is before the second moment and that is not adjacent to the second moment, the third moment is a moment before the second moment and that is adjacent to the second moment.

In another possible implementation, the third system information is sent by a third network device. If the second network device is a network device that is after the communication apparatus 1300 and that is adjacent to the communication apparatus 1300, the third network device is a network device before the communication apparatus 1300. Alternatively, if the second network device is a network device that is after the communication apparatus 1300 and that is not adjacent to the communication apparatus 1300, the third network device is a network device that is before the second network device and that is adjacent to the second network device.

In another possible implementation, a same type of configuration information of different transmission points in the second transmission point set is associated with a same areaSope identifier.

The following describes a communication apparatus provided in embodiments of this application. FIG. 14 is a diagram of a second structure of a communication apparatus according to an embodiment of this application. The communication apparatus may be configured to perform the steps performed by the terminal device in the embodiment shown in FIG. 5. For details, refer to the related descriptions in the foregoing method embodiment.

The communication apparatus 1400 includes a processing module 1401 and a transceiver module 1402.

The transceiver module 1402 is configured to receive second system information from a first network device, where the second system information includes configuration information of a second transmission point set and a second value tag associated with the configuration information of the second transmission point set.

The processing module 1401 is configured to: if a value of the second value tag is the same as a value of a first value tag, skip reading the configuration information of the second transmission point set in second system information, where the first value tag is a value tag associated with configuration information of a first transmission point set in first system information, and the second transmission point set is a proper subset of the first transmission point set.

In a possible implementation, configuration information of each transmission point in the second transmission point set in the second system information is a subset of configuration information of the transmission point in the first system information.

In another possible implementation, the processing module 1401 is further configured to obtain the first system information.

In another possible implementation, the first system information is sent by the first network device, or the first system information is sent by a second network device.

In another possible implementation, the first system information is sent by the first network device at a first moment, the second system information is sent by the first network device at a second moment, and the first moment is a moment before the second moment, or the first moment is a moment that is before the second moment and that is not adjacent to the second moment.

The second network device is a network device that is after the first network device and that is adjacent to the first network device, or the second network device is a network device that is after the first network device and that is not adjacent to the first network device.

In another possible implementation, the processing module 1401 is specifically configured to:
if the value of the second value tag is the same as a value of one of the first value tag and a fourth value tag, skip reading the configuration information of the second transmission point set in the second system information, where the fourth value tag is a value tag associated with configuration information of a third transmission point set in third system information.

In another possible implementation, the second transmission point set is a proper subset of the third transmission point set. In this implementation, the second transmission point set may further be the proper subset of the third transmission point set.

In another possible implementation, the configuration information of each transmission point in the second transmission point set in the second system information is a subset of configuration information of the transmission point in the third system information.

In another possible implementation, the configuration information of the second transmission point set is further associated with a third value tag. If the value of the second value tag is the same as the value of the first value tag, a value of the third value tag is the same as a value of the fourth value tag. Alternatively, if the value of the second value tag is the same as a value of the fourth value tag, a value of the third value tag is the same as the value of the first value tag.

In another possible implementation, the third system information is sent by the first network device at a third moment. If the first moment is the moment before the second moment, the third moment is a moment before the first moment. Alternatively, if the first moment is the moment that is before the second moment and that is not adjacent to the second moment, the third moment is a moment that is before the second moment and that is adjacent to the second moment.

In another possible implementation, the third system information is sent by a third network device. If the second network device is the network device that is after the first network device and that is adjacent to the first network device, the third network device is a network device before the first network device. Alternatively, if the second network device is the network device that is after the first network device and that is not adjacent to the first network device, the third network device is a network device that is before the second network device and that is adjacent to the second network device.

In another possible implementation, a same type of configuration information of different transmission points in the second transmission point set is associated with a same areaSope identifier.

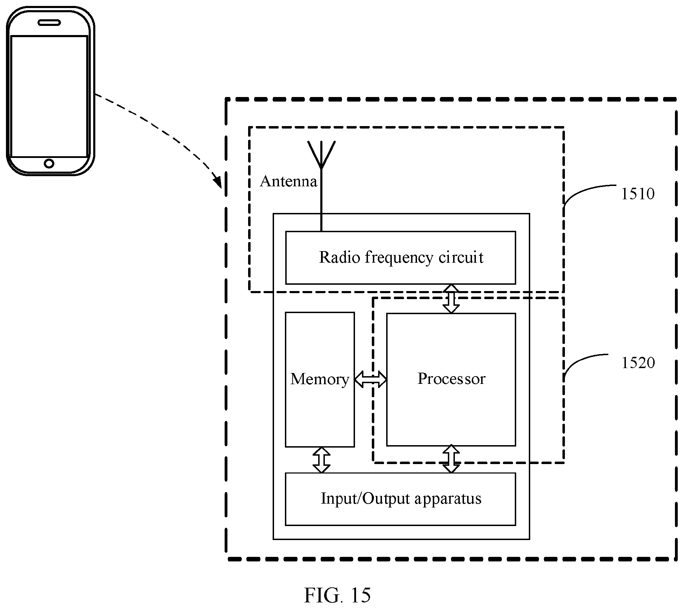

The following shows a possible diagram of a structure in which a first communication device is a terminal device in FIG. 15.

FIG. 15 is a simplified diagram of a structure of the terminal device. For ease of understanding and illustration, an example in which the terminal device is a mobile phone is used in FIG. 15. As shown in FIG. 15, the terminal device includes a processor, a memory, a radio frequency circuit, an antenna, and an input/output apparatus.

The processor is mainly configured to process a communication protocol and communication data, control the terminal device, execute a software program, process data of the software program, and the like.

The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave.

The input/output apparatus, such as a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna.

When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

For ease of description, FIG. 15 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the terminal device, and the processor that has a processing function may be considered as a processing unit of the terminal device. As shown in FIG. 15, the terminal device includes a transceiver unit 1510 and a processing unit 1520. The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the transceiver unit 1510 may be considered as a receiving unit, and a component configured to implement a sending function in the transceiver unit 1510 may be considered as a sending unit. In other words, the transceiver unit 1510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1510 is configured to perform a sending operation and a receiving operation of the terminal device side in the foregoing method embodiment, and the processing unit 1520 is configured to perform an operation other than the receiving and sending operations of the terminal device in the foregoing method embodiment.

When the terminal device is a chip, the chip includes the transceiver unit and the processing unit. The transceiver unit may be an input/output circuit or a communication interface. The processing unit is a processor, a microprocessor, an integrated circuit, or a logic circuit integrated on the chip.

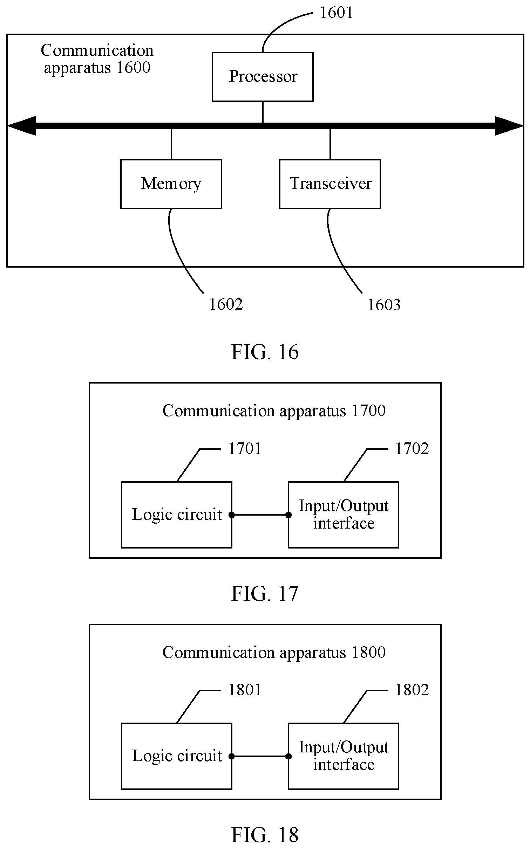

This application further provides a communication apparatus. FIG. 16 is a diagram of a third structure of a communication apparatus according to an embodiment of this application. The communication apparatus may be configured to perform the steps performed by the first network device in the embodiment shown in FIG. 5. For details, refer to the related descriptions in the foregoing method embodiment.

The communication apparatus 1600 includes a processor 1601 and a memory 1602. Optionally, the communication apparatus 1600 further includes a transceiver 1603.

In a possible implementation, the processor 1601, the memory 1602, and the transceiver 1603 are separately connected through a bus, and the memory stores computer instructions.

The processing module 1301 in the foregoing embodiment may be specifically the processor 1601 in this embodiment. Therefore, a specific implementation of the processor 1601 is not described again. The transceiver module 1302 in the foregoing embodiment may be specifically the transceiver 1603 in this embodiment. Therefore, a specific implementation of the transceiver 1603 is not described again.

FIG. 17 is a diagram of a fourth structure of a communication apparatus according to an embodiment of this application. Refer to FIG. 17. The communication apparatus 1700 includes a logic circuit 1701 and an input/output interface 1702. The communication apparatus 1700 shown in FIG. 17 may be configured to perform the steps performed by the first network device in the embodiment shown in FIG. 5.

Optionally, the logic circuit 1702 may have a function of the processing module 1301 in the embodiment shown in FIG. 13. The input/output interface 1702 may have a function of the transceiver module 1302 in the embodiment shown in FIG. 13.

The communication apparatus 1700 shown in FIG. 17 may perform the technical solutions shown in the foregoing method embodiment. An implementation principle and a beneficial effect of the communication apparatus are similar to those of the foregoing method embodiment, and details are not described herein again.

FIG. 18 is a diagram of a fifth structure of a communication apparatus according to an embodiment of this application. Refer to FIG. 18. The communication apparatus 1800 includes a logic circuit 1801 and an input/output interface 1802. The communication apparatus 1800 shown in FIG. 18 may be configured to perform the steps performed by the terminal device in the embodiment shown in FIG. 5.

Optionally, the logic circuit 1802 may have a function of the processing module 1401 in the embodiment shown in FIG. 14. The input/output interface 1802 may have a function of the transceiver module 1402 in the embodiment shown in FIG. 14.

The communication apparatus 1800 shown in FIG. 18 may perform the technical solutions shown in the foregoing method embodiment. An implementation principle and a beneficial effect of the communication apparatus are similar to those of the foregoing method embodiment, and details are not described herein again.

This application further provides a communication system. The communication system includes the communication apparatus shown in FIG. 13 and the communication apparatus shown in FIG. 14. The communication apparatus shown in FIG. 13 may be configured to perform all or some of the steps performed by the first network device in the embodiment shown in FIG. 5. The communication apparatus shown in FIG. 14 may be configured to perform all or some of the steps performed by the terminal device in the embodiment shown in FIG. 5.

An embodiment of this application further provides a computer program product including instructions. When the computer program product runs on a computer, the computer is enabled to perform the method in the embodiment shown in FIG. 5.

An embodiment of this application further provides a computer-readable storage medium, including computer instructions. When the computer instructions are run on a computer, the computer is enabled to perform the method in the embodiment shown in FIG. 5.

An embodiment of this application further provides a chip apparatus, including a processor, configured to connect to a memory and invoke a program stored in the memory, so that the processor performs the method in the embodiment shown in FIG. 5.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed systems, apparatuses, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions of embodiments of this application.

## Claims

1. A system information sending method, wherein the method comprises:
obtaining, by a first network device, a first value tag in first system information, wherein the first value tag is a value tag associated with configuration information of a first transmission point set in the first system information;
generating, by the first network device, second system information, wherein the second system information comprises configuration information of a second transmission point set and a second value tag associated with the configuration information of the second transmission point set, the second transmission point set is a proper subset of the first transmission point set, and a value of the second value tag is the same as a value of the first value tag; and
sending, by the first network device, the second system information.

2. The method according to claim 1, wherein configuration information of each transmission point in the second transmission point set in the second system information is a subset of configuration information of the transmission point in the first system information.

3. The method according to claim 1 or 2, wherein the method further comprises:
obtaining, by the first network device, the configuration information of the first transmission point set.

4. The method according to any one of claims 1 to 3, wherein the first system information is sent by the first network device, or the first system information is sent by a second network device.

5. The method according to claim 4, wherein the first system information is sent by the first network device at a first moment, the second system information is sent by the first network device at a second moment, and the first moment is a moment before the second moment, or the first moment is a moment that is before the second moment and that is not adjacent to the second moment; or
the second network device is a network device that is before the first network device and that is adjacent to the first network device, or the second network device is a network device that is before the first network device and that is not adjacent to the first network device.

6. The method according to claim 5, wherein the second transmission point set is a proper subset of the third transmission point set, and third system information comprises configuration information of the third transmission point set.

7. The method according to claim 5 or 6, wherein the configuration information of the second transmission point set is further associated with a third value tag, a value of the third value tag is the same as a value of a fourth value tag in the third system information, and the fourth value tag is a value tag associated with the configuration information of the third transmission point set.

8. The method according to claim 6 or 7, wherein the third system information is sent by the first network device at a third moment; and
if the first moment is a moment before the second moment, the third moment is a moment before the first moment; or
if the first moment is a moment that is before the second moment and that is not adjacent to the second moment, the third moment is a moment that is before the second moment and that is adjacent to the second moment.

9. The method according to claim 6 or 7, wherein the third system information is sent by a third network device; and
if the second network device is a network device that is after the first network device and that is adjacent to the first network device, the third network device is a network device before the first network device; or
if the second network device is a network device that is after the first network device and that is not adjacent to the first network device, the third network device is a network device that is before the second network device and that is adjacent to the second network device.

10. The method according to any one of claims 1 to 9, wherein a same type of configuration information of different transmission points in the second transmission point set is associated with a same area identifier areaSope.

11. A system information receiving method, wherein the method comprises:
receiving, by a terminal device, second system information from a first network device, wherein the second system information comprises configuration information of a second transmission point set and a second value tag associated with the configuration information of the second transmission point set; and
skipping, by the terminal device, reading the configuration information of the second transmission point set in the second system information if a value of the second value tag is the same as a value of a first value tag, wherein the first value tag is a value tag associated with configuration information of a first transmission point set in first system information, and the second transmission point set is a proper subset of the first transmission point set.

12. The method according to claim 11, wherein configuration information of each transmission point in the second transmission point set in the second system information is a subset of configuration information of the transmission point in the first system information.

13. The method according to claim 11 or 12, wherein before the receiving, by a terminal device, second system information from a first network device, the method further comprises:
obtaining, by the terminal device, the first system information.

14. The method according to any one of claims 11 to 13, wherein the first system information is sent by the first network device, or the first system information is sent by a second network device.

15. The method according to claim 14, wherein the first system information is sent by the first network device at a first moment, the second system information is sent by the first network device at a second moment, and the first moment is a moment before the second moment, or the first moment is a moment that is before the second moment and that is not adjacent to the second moment; or
the second network device is a network device that is after the first network device and that is adjacent to the first network device, or the second network device is a network device that is after the first network device and that is not adjacent to the first network device.

16. The method according to any one of claims 11 to 15, wherein the skipping, by the terminal device, reading the configuration information of the second transmission point set in the second system information if a value of the second value tag is the same as a value of a first value tag comprises:
if the value of the second value tag is the same as a value of one of the first value tag and a fourth value tag, skipping, by the terminal device, reading the configuration information of the second transmission point set in the second system information, wherein the fourth value tag is a value tag associated with configuration information of a third transmission point set in the third system information.

17. The method according to claim 16, wherein the second transmission point set is a proper subset of the third transmission point set.

18. The method according to claim 16 or 17, wherein the configuration information of each transmission point in the second transmission point set in the second system information is a subset of configuration information of the transmission point in the third system information.

19. The method according to any one of claims 16 to 18, wherein the configuration information of the second transmission point set is further associated with a third value tag; and
if the value of the second value tag is the same as the value of the first value tag, a value of the third value tag is the same as a value of the fourth value tag; or
if the value of the second value tag is the same as a value of the fourth value tag, a value of the third value tag is the same as the value of the first value tag.

20. The method according to any one of claims 16 to 19, wherein the third system information is sent by the first network device at a third moment; and
if the first moment is a moment before the second moment, the third moment is a moment before the first moment; or
if the first moment is a moment that is before the second moment and that is not adjacent to the second moment, the third moment is a moment that is before the second moment and that is adjacent to the second moment.

21. The method according to any one of claims 16 to 19, wherein the third system information is sent by a third network device; and
if the second network device is a network device that is after the first network device and that is adjacent to the first network device, the third network device is a network device before the first network device; or
if the second network device is a network device that is after the first network device and that is not adjacent to the first network device, the third network device is a network device that is before the second network device and that is adjacent to the second network device.

22. The method according to any one of claims 11 to 21, wherein a same type of configuration information of different transmission points in the second transmission point set is associated with a same area identifier areaSope identifier.

23. A communication apparatus, wherein the communication apparatus comprises a processing module and a transceiver module, wherein
the processing module is configured to perform a processing operation according to any one of claims 1 to 10, and the transceiver module is configured to perform receiving and sending operations according to any one of claims 1 to 10; or
the processing module is configured to perform a processing operation according to any one of claims 11 to 22, and the transceiver module is configured to perform receiving and sending operations according to any one of claims 11 to 22.

24. A communication apparatus, wherein the communication apparatus comprises a processor, and the processor is configured to execute a computer program or computer instructions in a memory to perform the method according to any one of claims 1 to 10 or the method according to any one of claims 11 to 22.

25. The communication apparatus according to claim 24, wherein the communication apparatus further comprises the memory.

26. A computer-readable storage medium, wherein the computer-readable storage medium stores a computer program, and when the computer program is executed by an apparatus, the apparatus is enabled to perform the method according to any one of claims 1 to 10 or the method according to any one of claims 11 to 22.

27. A computer program product, wherein when the computer program product runs on a computer, the computer is enabled to perform the method according to any one of claims 1 to 10 or the method according to any one of claims 11 to 22.
